# EUROPÄISCHE PATENTSCHRIFT

(11) **EP 0 972 389 B1**
(45) Veröffentlichungstag und Bekanntmachung des Hinweises auf die Patenterteilung: **04.06.2003**
(21) Anmeldenummer: 98919170.5
(22) Anmeldetag: 27.03.1998
(51) Int. Cl.: H04L 29/14, G06F 11/00

(54) **SICHERHEITSGERICHTETES STEUERUNGSSYSTEM SOWIE VERFAHREN ZUM BETREIBEN EINES SOLCHEN**
SECURITY CONTROL SYSTEM, METHOD FOR THE OPERATION THEREOF
SYSTEME DE COMMANDE DE SECURITE ET PROCEDE POUR LA MISE EN OEUVRE D'UN TEL SYSTEME

(30) Priorität: 27.03.1997 DE 19712992; 14.10.1997 DE 19745161
(43) Veröffentlichungstag der Anmeldung: 19.01.2000
(73) Patentinhaber: Elan Schaltelemente GmbH & Co. KG, 35435 Wettenberg (DE)
(72) Erfinder: KRAMER, Manfred, D-35396 Gie en (DE); ZIEGLER, Olaf, D-56379 Geilnau (DE); THÜRINGER, Rainer, D-35398 Gie en (DE); SCHNEIDER, Volkmar, D-35719 Angelburg (DE); KRAUSKOPF, Arno, D-35444 Biebertal (DE)
(74) Vertreter: Stoffregen, Hans-Herbert, Dr. Dipl.-Phys.
(86) Internationale Anmeldenummer: EP9801813
(87) Internationale Veröffentlichungsnummer: WO98044469

(56) Entgegenhaltungen:
- EP-A- 0 732 654
- PEHRS J U ET AL: "CAN - DAS SICHERE BUSKONZEPT" ELEKTRONIK, Bd. 40, Nr. 17, 20. August 1991, Seiten 96-101, XP000260942

## Beschreibung

Die Erfindung bezieht sich auf ein sicherheitsgerichtetes Steuerungssystem gemäß Oberbegriff des Anspruchs 1 sowie auf ein Verfahren zum Betreiben eines sicherheitsgerichteten Steuerungssystems gemäß Oberbegriff des Anspruchs 20.

Aus einem Fachaufsatz von J. U. Pehrs u. a.: "Das sichere Buskonzept", ELEKTRONIK, 17/1991, Seiten 96 bis 100, ist ein Steuerungssystem zur Vernetzung von Teilsystemen im Kraftfahrzeug bekannt. Dabei werden sicherheitsrelevante Informationen wie Brems-, Lenk- und Motordaten in eine zentrale Einheit übertragen und dort verarbeitet. Das Steuerungssystem ist als Bussystem ausgebildet, wobei alle Teilnehmer des Busses eine programmierbare Steuereinheit im Mikrocontroller mit einem integrierten CAN-Controller aufweisen. Aufgabe des Mikrocontrollers mit integriertem CAN-Controller ist es, Busleitungsfehler abzufangen. Unter Busleitungsfehlern werden Kurzschlüsse oder Unterbrechungen der Busleitung verstanden, wodurch die Kommunikation der Knoten des Netzwerkes beeinträchtigt oder unterbunden wird.

Das beschriebene System ist ausschließlich zur Erkennung von Busfehlern bei Kurzschluss oder Unterbrechung konzipiert. Es sind keine Hinweise dahingehend zu entnehmen, wie die an den Ein- und/oder Ausgängen des Mikrocontrollers anliegenden Informationen wie Brems-, Lenk- und Motordaten innerhalb des Mikrocomputers verarbeitet werden und wie der Datenaustausch zwischen den Teilnehmern des Busses mit einer zentralen Einheit abläuft.

In EP 0 732 657 A1 ist ein Verfahren zur fehlertoleranten Kommunikation unter hohen Echtzeitbedingungen beschrieben. Die Kommunikation erfolgt in einem lokalen Netzwerk, wobei eine Doppelbusarchitektur zur Fehlermitteilung und zur Tolerierung globaler Busfehler verwendet wird. In einem der redundanten Bussysteme werden im fehlerfreien Betrieb alle Prozessdaten übertragen und im anderen Bussystem Statusinformationen. Die Doppelbusarchitektur ist jedoch mit einem erhöhten Montage- und Kostenaufwand verbunden.

Aus dem Stand der Technik sind des Weiteren als Bussysteme ausgebildete Steuerungssysteme bekannt. Zum einen sind die Bussysteme als sogenannte "Master/Slave-Systeme" ausgeführt, wobei eine zentrale Station als "Master" und dezentrale Stationen als "Slaves" ausgebildet sind. Dabei sind die Slaves z. B. mit Signalgebern und/oder Aktoren verbunden, deren Zustände über eine Busleitung dem Master zugeführt werden. Die steuerungstechnische Verknüpfung der Eingangssignale zu entsprechenden Ausgangssignalen wird in dem zentralen Master durchgeführt, der seinerseits Ausgänge aufweist oder dezentrale Ausgänge ansteuert, um eine steuerungstechnische Anlage zu betreiben.

Andererseits sind auch "Multi-Master-Systeme" bekannt, bei denen sowohl zentrale als auch dezentrale Stationen als Master ausgebildet sind. Hier findet die steuerungstechnische Verknüpfung der Eingangssignale zu entsprechenden Ausgangssignalen in den dezentralen Stationen mit jeweils einem oder mehreren Mastern statt. Auch können einer zentralen Master-Station übergeordnete, koordinierende Steuerungsfunktionen zugeteilt werden.

Bei den beschriebenen Bussystemen handelt es sich jedoch nicht um sicherheitsgerichtete Bussysteme. Für die Übertragung sicherheitsgerichteter Signale können nur Busse bzw. Bussysteme eingesetzt werden, die fehlertolerant bzw. Fehler beherrschend, z.B. redundant aufgebaut sind. Sicherheitsgerichtete Signale sind solche, die sicherheitstechnsiche Zwecke oder Aufgaben erfüllen, um gefährliche Zustände für Personen oder Schäden an Anlageausrüstungen zu vermeiden bzw. rasch zu beseitigen. Ein redundantes Bussystem, das sicherheitstechnischen Anforderungen genügt, besteht z. B. aus zwei gleichen Bussystemen, die beide die sicherheitsgerichteten Signale auswerten und über einen fehlersicheren Vergleicher auf Identität prüfen. Bei einem derartigen Bussystem werden Fehler durch die Auswertung erkannt. Im Fehlerfall, d. h. bei Unterschieden in den Auswertezuständen erfolgt eine Systemabschaltung, wodurch die Maschinen, Fertigungsanlagen u. ä. in einen für Personen oder Anlageteile ungefährlichen Zustand versetzt werden. Die Unterschiede müssen innerhalb einer Fehlerreaktionszeit von z.B. 20 msec erkannt werden und innerhalb dieser Zeit auch zur Not-Abschaltung der elektrischen Ausrüstung führen, wobei die Not-Abschaltung einem sicherheitsgerichteten Steuerbefehl entspricht.

Eine vollständig doppelte Busausführung erfordert nicht nur die doppelte zweikanalige Ausführung der Bus-Module für die Sensoren und Aktoren sowie zwei Bus-Master zur Systemüberwachung und fehlersicheren Abschaltung, sondern auch die Verlegung zweier unabhängiger Leitungssysteme.

Die Signalverarbeitung bei sicherheitsgerichteten Stromkreisen umfasst regelmäßig die Funktionen "Signalübertragung", "Signalverknüpfung bzw. Signalauswertung" sowie "Verarbeitung zu einem Steuerbefehl".

Die Funktionen "Signalverknüpfung bzw. Signalauswertung" sowie "Verarbeitung zu einem Steuerbefehl" eines Sicherheitsstromkreises werden dabei traditionell zentral ausgeführt. So erfolgt beispielsweise die Signalverknüpfung bzw. Signalauswertung sowie die Verarbeitung zu einem Steuerbefehl von Not-Aus-Befehlseinrichtungen, Verriegelungseinrichtungen beweglicher Schutzeinrichtungen u. ä. zentral in einem oder - bei größeren Maschinen, Fertigungssystemen oder in komplexen Anlagen - in mehreren Schaltschränken.

Hier werden zunächst alle Eingangssignale aus dem Sicherheitsstromkreis unabhängig von der Übertragungsart übertragen, verknüpft und zu Steuerbefehlen verarbeitet, die dann wieder dezentralisiert werden müssen, um z. B. einen Antrieb einer Gefahr bringenden Bewegung abzuschalten.

Davon ausgehend liegt der Erfindung das Problem zu Grunde, ein sicherheitsgerichtetes Steuerungssystem derart weiterzuentwickeln, dass die Reaktionszeiten des Steuerungssystems auf Fehler- und Eingangssignale verkürzt werden.

Das Problem wird verfahrensmäßig durch die kennzeichnenden Merkmale des Anspruchs 20 gelöst.

In Prozessen, in denen eine Recheneinheit (CPU) wie Mikrocomputer eingebunden ist, ist das Zusammenspiel von Rechenleistung und Programmgröße entscheidend für die Reaktionsgeschwindigkeit des Gesamtsystems. Wird z. B. der Zustand eines Eingangs einer Station abgefragt, so würde die nächste Abfrage erst im nächsten Durchlauf des Programms erfolgen, somit wird jeder Eingang im System nach jeder Zykluszeit eines Programmdurchlaufs abgefragt. In sicherheitsgerichteten Systemen werden im Allgemeinen bestimmten Eingängen logische Verknüpfungen zugewiesen, welche wiederum auf Ausgänge wirken, die eine sicherheitsgerichtete Abschaltung auslösen. Die Reaktionszeit des Systems entspricht der Zeit vom Betätigen eines Schaltelementes, welches zu einer Eingangszustandsänderung führt, bis zum Schalten des jeweiligen Ausgangs.

Um eine Minimierung der Reaktionszeit im Anforderungsfall zu erreichen, ist es notwendig, dass die Ausgänge innerhalb eines Bussystems eine selbständige Abschaltung veranlassen, ohne dass die Abschaltung von einer übergeordneten Steuerung veranlasst wurde. Die Ausgänge reagieren direkt selbständig auf sicherheitsrelevante Zustandsänderungen, welche von Eingangszustandsänderungen auf den Bus gelegt wurden. Die direkte Reaktion der Ausgänge erfolgt vorzugsweise auf Zustandsänderungen, welche zum Abschalten der Freigaben führen würden.

Aus diesem Grund ist vorgesehen, dass die programmierbare Steuereinheit über ein Koppelelement wie CAN-Controller mit der Busleitung gekoppelt ist, wobei der programmierbaren Steuereinheit ein Speicherelement mit Informationen bzw. Nachrichteninhalten zum Aktivieren von Ausgängen und/oder Eingängen zugeordnet ist und wobei in Abhängigkeit eines Vergleichs der in dem Speicherelement abgelegten Informationen mit auf dem Bus übertragenen Informationen zumindest ein Eingang und/oder Ausgang aktivierbar ist.

Um dies zu ermöglichen, wird den jeweiligen Stationen vor Inbetriebnahme des Systems über den Bus mitgeteilt, auf welche Nachrichteninhalte bzw. Informationen welche Freigabe, d. h. welcher Ausgang abgeschaltet werden soll. Somit befinden sich in den Speichern der jeweiligen Ausgangsstation Tabellen, welche die Nachrichteninhalte, die zum Abschalten der jeweiligen Freigaben führen sollen, beinhalten. Selbstverständlich können die Speicher auch Informationen zum Einschalten von Ausgängen beinhalten. Die Funktion der übergeordneten Steuerung bleibt bestehen. Es wird lediglich ein zusätzlicher Abschaltweg/Einschaltweg in das System integriert.

Das Verfahren wird durch ein Steuerungssystem durchgeführt, dass sich durch die Merkmale des Anspruchs 1 auszeichnet.

Mit anderen Worten wird ein sicherheitsgerichtetes Steuerungssystem realisiert, das aus einer Vielzahl dezentraler Eingangs- und Ausgangsstationen bzw. Ein-/Ausgangskombinationsstationen besteht. Die Stationen sind dabei jeweils so ausgeführt, dass die Funktion "Signalverknüpfung bzw. Signalauswertung" und/oder die Funktion "Verarbeitung zu einem Steuerbefehl" dezentral erfolgen können. Die Stationen können dabei - je nach konstruktiver Ausführung - als Schaltschrank-Einbaugeräte oder als Feld-taugliche Stationen ausgeführt sein. Im Vergleich zu Steuerungssystemen nach dem Stand der Technik, wobei die Signalverknüpfung sowie die Verarbeitung zu einem Steuerbefehl in zentralen Sicherheits-Steuergeräten, die in einem oder mehreren Schaltschränken untergebracht sind, ist bei dem erfindungsgemäßen sicherheitsgerichteten Steuerungssystem eine Dezentralisierung von erzeugten Steuerbefehlen nicht notwendig. Insofern können auch Funktionen wie Selbstdiagnose, Überwachung sowie die zuvor erwähnten Steuerfunktionen dezentralisiert durchgeführt werden. Als besonderer Vorteil ist dabei zu erwähnen, dass das zwischen den Stationen angeordnete Übertragungsmedium von überflüssigem Datentransfer entlastet wird.

Zentrale Funktionen werden auf ein Minimum reduziert, d. h. diese Funktion dient lediglich noch der Programmierung bzw. Parametrierung des Systems, der Systemadministration (z. B. wie viele und welche Stationen sind am System angeschlossen), der sicherheitsgerichteten Überwachung der Busleitung sowie einer übergeordneten Sicherheitsfunktion, wenn zueinander in Abhängigkeit stehende Eingangs- und Ausgangsinformationen räumlich voneinander getrennt sind, z. B. in zwei verschiedenen Stationen.

Eine übergeordnete, zentrale Station kann als Bus-Master dabei reine Überwachungsfunktionen übernehmen und im Fehlerfall Abschaltsignale an die dezentralen Stationen und/oder an angeschlossene Vorrichtungen absenden.

Bei einer bevorzugten Ausführungsform ist vorgesehen, dass die Stationen einen redundanten Aufbau mit zwei unabhängigen, galvanisch getrennten Teilsystemen bzw. Knoten oder Kanälen aufweisen. Bei einer weiteren bevorzugten Ausfühungsform ist vorgesehen, dass die redundanten Teilsysteme jeweils eigenständige Software-Pakete mit unterschiedlicher Programmstruktur zur Durchführung derselben Berechnung aufweisen. Die hardware-mäßig redundante Ausführung der Stationen stellt sicher, dass im Falle eines gefahrbringenden Ausfalls oder einer gefahrbringenden Störung in einem der beteiligten Kanäle der/die anderen Kanäle weiterhin die sicherheitsgerichtete Funktion aufrechterhalten können.

Das Merkmal der hardware-mäßigen Mehrkanaligkeit und/oder der Software-mäßigen Mehrkanaligkeit wird des Weiteren zur Feststellung benutzt, ob einer der beteiligten Kanäle fehlerhaft ist, indem die gewünschte Valenz oder Antivalenz der Kanäle miteinander verglichen werden. Fällt der Vergleich unterschiedlich aus, erfolgt ein vorbestimmtes fehlerbeherrschendes und/oder fehlertolerantes Verhalten des Systems. Bei einem fehlerbeherrschenden Ausfallverhalten, das insbesondere für die Sicherheit von Maschinen und Maschinensteuerung bevorzugt wird, wird im Fehlerfall bevorzugt abgeschaltet. Bei einem fehlertoleranten Ausfallverhalten, das vorzugsweise bei Anwendungen in Flugzeugen, Verkehrsmitteln und verfahrenstechnischen Anlagen eingesetzt wird, wird im Fehlerfall bevorzugt nicht abgeschaltet.

Des Weiteren sind sowohl sicherheitsgerichtete fehlerbeherrschende Arbeitsweisen als auch sicherheitsgerichtete fehlertolerierende Arbeitsweisen möglich. Dabei bedeutet "sicherheitsgerichtet fehlerbeherrschend" bezogen auf die Anforderungen an die Sicherheit von Maschinen und Maschinensteuerung, dass in Abhängigkeit von einer durchgeführten Risikobeurteilung zwischen verschiedenen Steuerungskategorien unterschieden wird. Bei einer sicherheitsgerichteten fehlertolerierenden Arbeitsweise bewirkt ein Fehler in einem beliebigen Teil des sicherheitsgerichteten Steuerungssystems ebenfalls nicht den Verlust der Sicherheitsfunktion, wobei jedoch der Eintritt des Fehlerfalls nicht zum Abschalten des System führen darf, sondern die Funktion der anderen Kanäle aufrechterhalten bleibt.

Zur Ausführung der "steuerungstechnischen Intelligenz" ist vorgesehen, dass zumindest eine der dezentralen Stationen zumindest eine programmierbare Steuereinheit wie Mikrocomputer aufweist, der die Funktionen Signalübertragung, Signalempfang und Auswertung sowie die Verarbeitung der Signale zu Steuersignalen übernimmt. Bei zweikanaligen Stationen sind pro Kanal jeweils eine programmierbare Steuereinheit vorgesehen.

Vorzugsweise sind die zentralen und/oder dezentralen Stationen über eine Busleitung wie CAN-Busleitung miteinander verbunden, wobei der Bus als Strang ausgeführt ist und wobei sich die Busleitung zwischen einer als Bus-Anfangsstation ausgebildeten und einer Bus-Abschluss-Station als dezentraler Station erstreckt und weitere dezentrale Stationen mit einem Bus-Eingang und einem Bus-Ausgang in die Busleitung eingeschleift sind. Dabei ist vorgesehen, dass die Stationen untereinander Informationen austauschen, wobei eine Station aufgrund einer Zustandsänderung an einem Eingang eine Information auf den Bus abgibt, die von zumindest einer weiteren Station gelesen und ausgewertet wird und wobei die Stationen in Abhängigkeit von empfangenen Informationen eigenständig zugeordnete Steuerungsfunktionen ausführen. Hierdurch wird ein dezentrales intelligentes Steuerungssystem zur Verfügung gestellt, bei dem alle Busteilnehmer lokal Selbstdiagnose-Überwachung- und Steuerungsfunktionen dezentralisiert ausführen können.

Bei einer weiteren vorteilhaften Ausführungsform kann die Bus-Anfangsstation als Master-Station ausgeführt sein, die übergeordnete Bus-Steuerungsfünktionen übernimmt.

Als besonders vorteilhaft ist zu erwähnen, dass zwischen der intelligenten Bus-Anfangsstation und der Bus-Abschluss-Station Signale ausgetauscht werden, um Fehler der Busleitung detektieren zu können.

Des Weiteren ist vorzugsweise vorgesehen, dass die Busleitung insgesamt vier Adern aufweist, wobei zwei Adern zur Energieversorgung und zwei weitere Adern zur Datenübertragung eingesetzt werden,

Als besonders vorteilhaft ist zu erwähnen, dass die Stationen mit Wechselspannung versorgt werden, wobei jedem Kanal einer Station ein separates Netzteil zugeordnet ist. Dabei weist jedes Netzteil einen eigenen Transformator auf, so dass die beiden Kanäle potentialgetrennt betrieben werden.

Zumindest eine der Stationen, vorzugsweise die Bus-Anfangsstation (Master-Station), ist mit einem externen als Trenntransformator ausgebildeten Transformator zur Erzeugung der Versorgungswechselspannung verbunden. Die Versorgungswechselspannung liegt im Bereich von 20 bis 50 V AC, vorzugsweise 42 V AC.

Zur gegenseitigen Überprüfung der Kanäle bzw. Knoten sind die den Kanälen zugeordneten programmierbaren Steuereinheiten wie Mikrocomputer über eine galvanisch entkoppelte Schnittstelle seriell miteinander gekoppelt.

Zur Kommunikation mit einer übergeordneten Steuereinheit weist zumindest eine Station eine serielle Schnittstelle wie RS 232- oder CAN-Schnittstelle auf. Zur Programmierung des Systems weist zumindest eine Station eine weitere Schnittstelle wie RS 232-Schnittstelle auf.

Auch ist vorgesehen, dass zumindest die Bus-Anfangsstation (Master-Station) als auch zumindest die Bus-Abschlussstation jeweils Einheiten zur Erzeugung vorzugsweise periodischer Busmeldungen bzw. Bus-Signale sowie Einrichtungen zum Empfang von Busmeldungen bzw. Bus-Signalen aufweisen, wobei beim Ausbleiben von Busmeldungen innerhalb einer bestimmten Zeitspanne ein sicherheitsgerichteter Steuerbefehl erzeugt wird.

Um im Fehlerfall ein sofortiges Abschalten des Busses herbeizuführen, sind die Mikrocomputer einer Station jeweils mit einem elektromechanischen Schaltgerät wie Relais verbunden, die eine übergeordnete Abschaltfunktion erfüllen.

Weitere Einzelheiten, Vorteile und Merkmale der Erfindung ergeben sich aus der nachfolgenden Beschreibung eines der Zeichnung zu entnehmenden Ausführungsbeispiels.

Es zeigen:
- Fig. 1: prinzipieller Aufbau eines Sicherheitsbussystems,
- Fig. 2: prinzipieller Aufbau einer Master-Station mit zwei Kanälen,
- Fig. 3: Schaltungsanordnung eines ersten Kanals der Master-Station gemäß Fig. 2
- Fig. 4: prinzipieller Aufbau einer Ein- und/oder Ausgangs-Station,
- Fig. 5: prinzipieller Aufbau einer Bus-Abschluss-Station,
- Fig. 6: Schaltungsaufbau eines Sicherheitsschaltkreises,
- Fig. 7: eine Bus-Ausgangsstation mit externer Beschaltung,
- Fig. 8: einen Strompfad der Bus-Ausgangsstation mit externer Beschaltung gemäß Fig. 7,
- Fig. 9: eine Bus-Eingangsstation mit externer Beschaltung,
- Fig. 10: einen Strompfad der Bus-Eingangsstation mit externer Beschaltung gemäß Fig. 9,
- Fig. 11: eine Ein- und/oder Ausgangsstation mit externer Beschaltung am Beispiel einer Türüberwachungsstation,
- Fig. 12 - 16: Darstellungen von Programmiermasken und
- Fig. 17: logischer Aufbau einer Abschalttabelle.

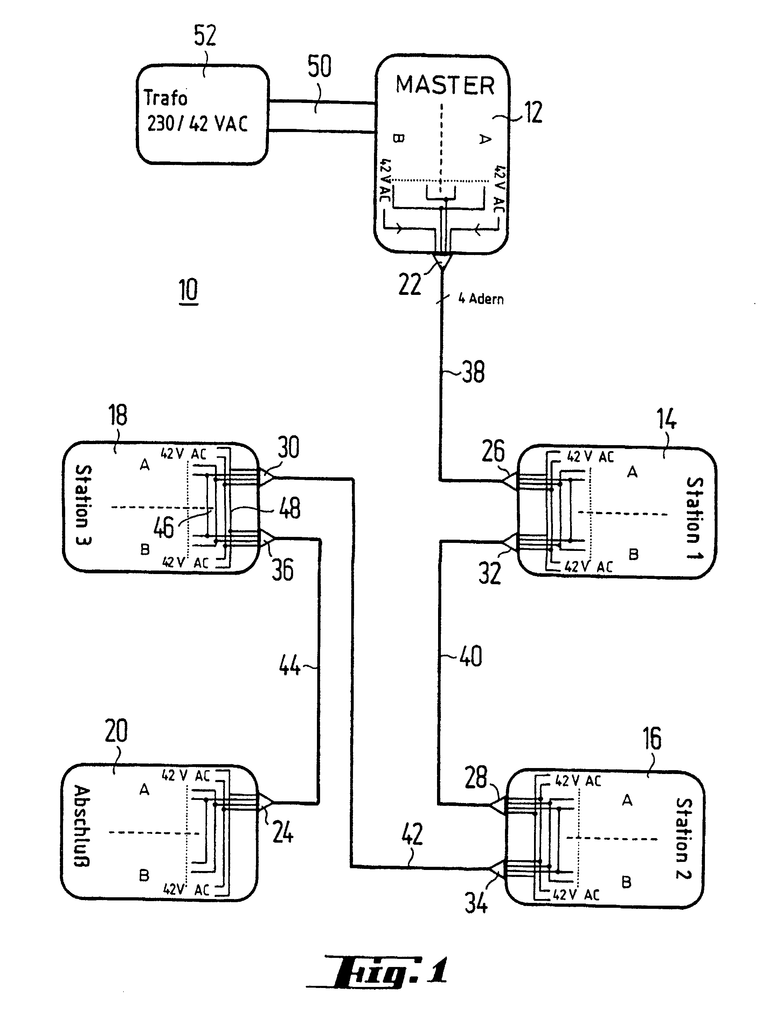

Fig. 1 zeigt ein sicherheitsgerichtetes Steuerungssystem 10, das in dem hier dargestellten Ausführungsbeispiel als strangförmiges Bussystem ausgebildet wird. Das Bussystem weist eine Vielzahl von miteinander in Verbindung stehender Ein- und/oder Ausgänge aufweisender zentraler und/oder dezentraler Stationen 12, 14,16 ,18, 20 auf. Dabei ist eine erste Station 12 als Bus-Anfangsstation bzw. als Bus-Master mit einem Busanschluss 22 und eine letzte Station 20 als Bus-Abschluss-Station mit einem Buseingang 24 ausgebildet. Die weiteren Stationen 14, 16, 18 besitzen jeweils einen Buseingang 26, 28, 30 und einen Busausgang 32, 34, 36. Zwischen einem Busausgang 22, 32, 34, 36 einer Bus-Station und einem Buseingang 26, 28, 30 ist jeweils eine einkanalige Busleitung 38, 40, 42, 44 angeordnet. Auf diese Weise kann das Bussystem 10 einen Strang mit bis zu 64 Stationen aufweisen.

Das Übertragungsmedium bzw. die einkanalige Busleitung 38, 40, 42, 44 besteht aus einer Datenleitung 46 und einer Energieversorgungsleitung 48. Dabei sind sowohl die Datenleitung als auch die Energieversorgungsleitung zweiadrig ausgebildet.

Zur Energieversorgung ist der Bus-Master 12 über eine Zuleitung 50 mit einem Transformator 52 verbunden, der seinerseits mit Netzspannung verbunden ist und eine berührungssichere Versorgungswechselspannung von vorzugsweise 42 V AC zur Verfügung stellt. Sowohl die Datenleitung 46 als auch die Energieversorgungsleitung 48 werden innerhalb der die Busein- und -ausgänge 26, 32; 28, 34; 30, 36 aufweisenden Stationen intern durchgeschliffen. Grundsätzlich weist jede Station 12, 14, 16, 18, 20 des Bussystems 10 zwei voneinander unabhängige Teilsysteme bzw. Knoten A, B auf, die im Folgenden als Kanal A und Kanal B bezeichnet werden. Durch die zweikanalige Ausbildung wird ein redundantes System aufgebaut. Dabei hat jeder Kanal A, B innerhalb der Station 12 - 20 die Möglichkeit, selbständig auf den Bus 38 - 44 zuzugreifen. Mit anderen Worten arbeitet jeder Kanal A, B nach dem Multi-Master-Prinzip selbständig. Grundsätzlich weisen die Stationen 12 - 20 einen im wesentlichen identischen Hardware-Aufbau auf.

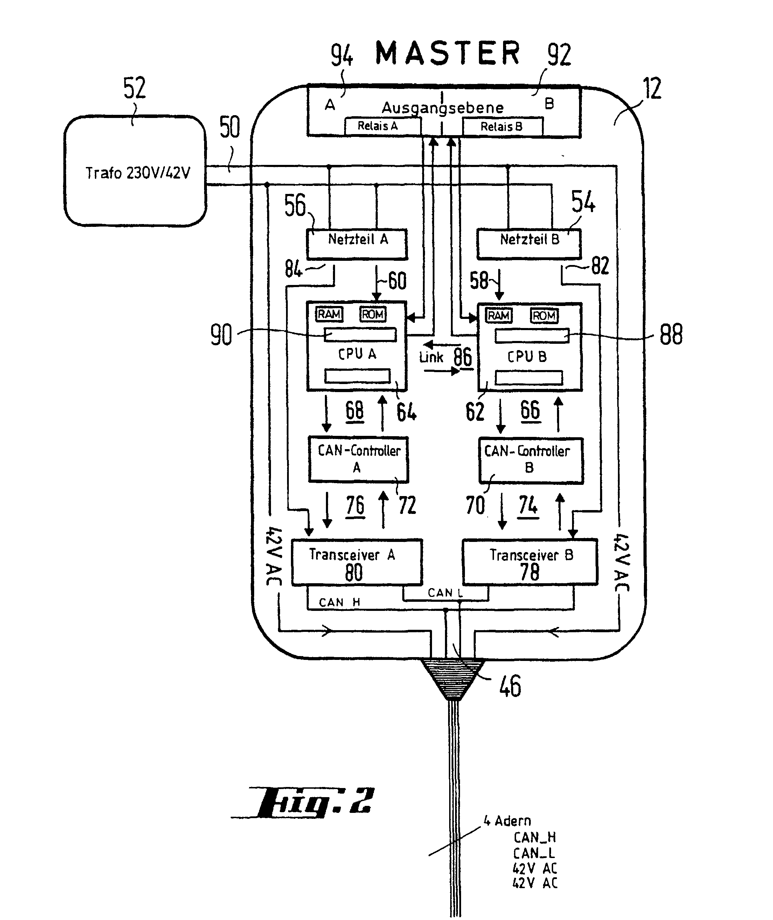

In Fig. 2 ist der Aufbau des Bus-Masters 12 dargestellt. Die Kanäle A und B weisen jeweils ein Netzteil 54, 56 auf, das eingangsseitig mit der Vorsorgungsleitung 50 verbunden sind. Ein erster Ausgang 58, 60 des Netzteils 54, 56 ist mit einer programmierbaren Steuereinheit 62, 64 wie Mikrocomputer verbunden. Die Mikrocomputer 62, 64 sind über Leitungen 66, 68 mit Bus-Controlern 70, 72 verbunden, die über weitere Leitungen 74, 76 mit Buskopplern 78, 80 mit der Bus-Datenleitung 46 verbunden sind. Die Buskoppler 78, 80 weisen eine separate Spannungsversorgung auf und sind mit einem zweiten Ausgang 82, 84 des Netzteils 54, 56 verbunden.

Über eine Verbindungsleitung bzw. einen Link 86 zwischen den Mikrocomputern 62, 64 erfolgt ein Datenaustausch zwischen den Kanälen A und B zur gegenseitigen Überprüfung. Dabei handelt es sich um eine galvanisch entkoppelte, serielle Schnittstelle. Des Weiteren sind in den Mikrocomputern 62, 64 serielle Schnittstellen 88, 90 wie RS 232- oder CAN-Schnittstelle vorgesehen, die über jeweils eine Verbindungsleitung mit einer Ausgangsebene 92 des Kanals B und eine Ausgangsebene 94 des Kanals A verbunden sind, um eine Verbindung zu einem externen Prorammiergerät wie Personalcomputer zur Programmierung des Bussystems herzustellen. Auch können weitere Schnittstellen zur Ankopplung an andere Busebenen vorgesehen sein. Die Ausgangsebenen 92, 94 weisen jeweils bis zu acht Halbleiterausgänge auf.

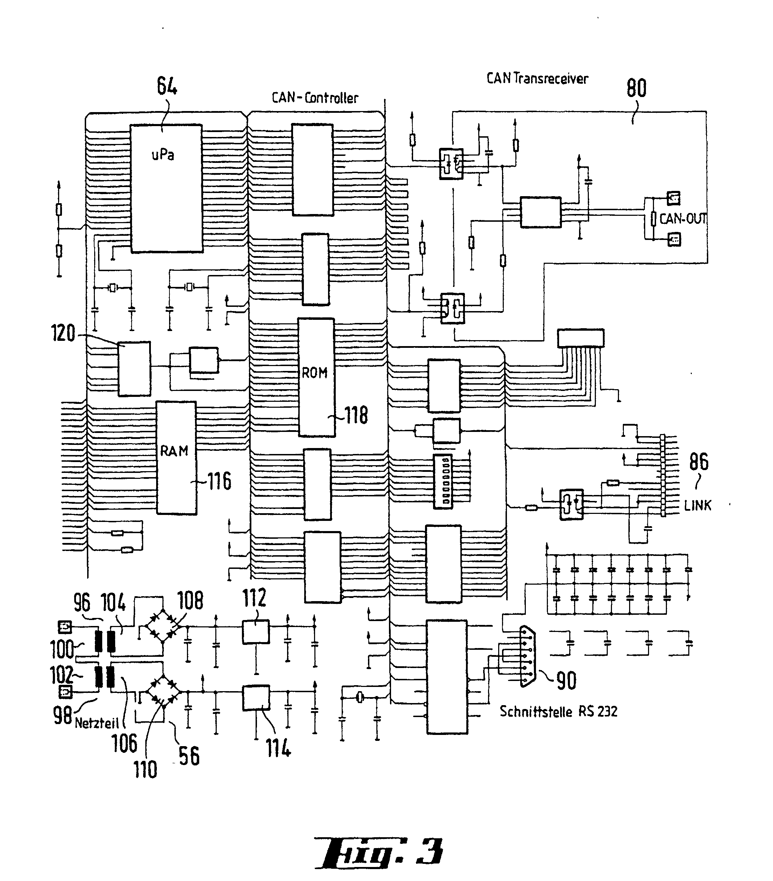

In Fig. 3 ist eine Schaltungsanordnung des Kanals A der Master-Station 12 gemäß Fig. 2 im Detail dargestellt. Dabei weist der Kanal A einen an sich nach dem Stand der Technik typischen Schaltungaufbau auf. Das Netzteil 56 umfasst zwei Transformatoren 96, 98, deren Primärwicklungen 100, 102 primärseitig in Reihe an Versorgungsspannung liegen. Die Transformatoren 96, 98 weisen jeweils eine Sekundärwicklung 104, 106 auf, die jeweils über einen Gleichrichter 108, 110 und über einen Spannungsregler 112, 114 eine geregelte Ausgangsspannung für den Mikrocomputer 64 bzw. für den Buskoppler 80 zur Verfügung stellen. Der Mikrocomputer 64 weist zudem externe Speicherbausteine 116, 118 wie RAM und ROM auf sowie einen Watchdog 120. Die beiden Mikrocomputer 62, 64 der Master-Station 12 können unabhängig voneinander auf den Bus 38, 40, 42, 44 über jeweils den Buskoppler 78, 80 zugreifen. Über den Link 86 ist ein Datenaustausch für Kontrollzwecke möglich. Die Verbindung ist optoelektronisch entkoppelt.

Durch den zentralen Leistungstransformator 52 wird die Netzspannung von U_{N} = 230 V AC auf eine Versorgungsspannung Uᵥ = 42 V AC transformiert. Die Versorgungsspannung Uᵥ liegt am Eingang des Netzteils 54, 56 an und ist mit den Eingangswicklungen der Transformatoren 96, 98 verbunden. An den Ausgangswicklungen 104, 106 liegt eine Spannung von ca. 8 V AC an, die über den Gleichrichter 108, 110 und zugeordnete Spannungsregeler 112, 114 auf ca. 5 V begrenzt wird. Die Spannung wird mit Hilfe des Watchdog 120 überwacht.

Der ROM-Baustein 118 dient zur Speicherung von Firmware. Der ROM-Baustein 118 ist als EPROM ausgebildet und wird mit Hilfe einer Checksummenbildung 16 Bit (CRC-Check) zyklisch überprüft. Anwenderspezifische Daten werden in einem Flash-EPROM gespeichert. Die Programmierung des Flash-EPROMS erfolgt über die serielle Schnittstelle 90. Mit Hilfe eines Schalters und verschiedener Sicherungsmechanismen können die Anwenderdaten übernommen werden. Die Prüfung des Flash-EPROMS erfolgt mit Hilfe des oben beschriebenen CRC-Check.

Das externe RAM 116 ist zusätzlich zu einem prozessorinternen RAM vorgesehen. Dieser RAM-Baustein 116 beinhaltet eine RTC (Real Time Clock). Für den Mikrocomputer 62 ist ebenfalls ein externes RAM vorgesehen, das allerdings keine RTC aufweist.

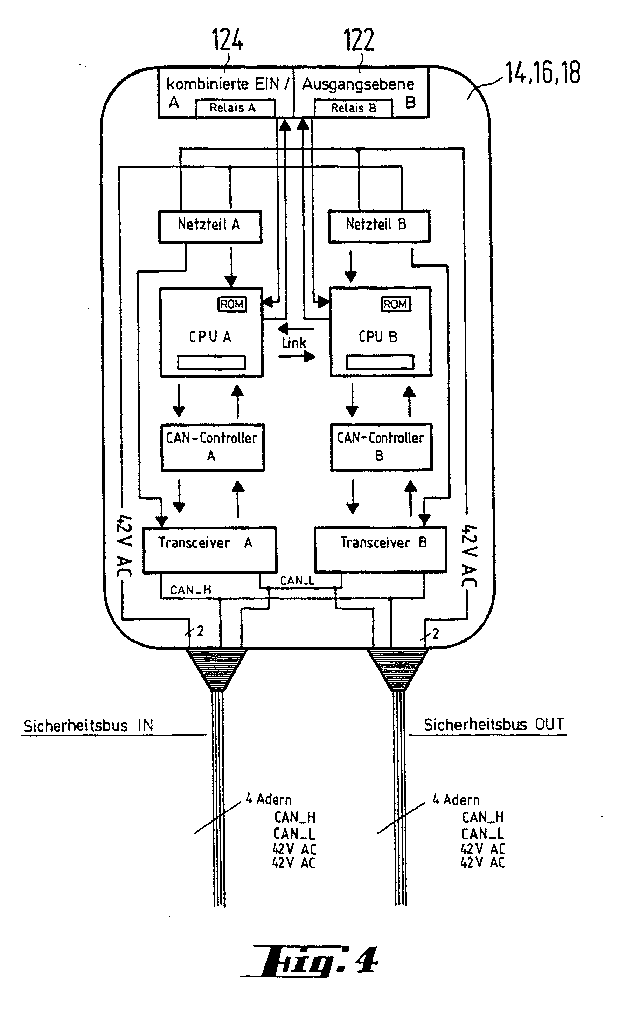

Fig. 4 zeigt beispielhaft den Aufbau einer der Stationen 14, 16, 18. Die Stationen 14, 16, 18 weisen im Wesentlichen den gleichen internen Aufbau auf wie die Master-Station 12. Ein wesentlicher Unterschied besteht in der Ausbildung einer Ein- und/oder Ausgangsebene 124, 122. So können die Bus-Stationen als Bus-Ausgangsstationen mit bis zu acht Halbleiterausgängen oder als Bus-Eingangsstationen mit Halbleitereingängen ausgebildet sein, an der ein bis vier Not-Aus-Taster oder wahlweise ein bis acht Befchlsgeräte wie Verriegelungs oder Entriegelungsgeräte angeschlossen sind. Die Kontaktelemente werden dabei an eine Klemme gelegt und intern - über Optokoppler getrennt - mit den Eingängen der beiden Mikrocomputersysteme verbunden. Zur Überprüfung der Leitungen auf Querschluss werden zur Testung die Leitungen periodisch mit Signalen beaufschlagt.

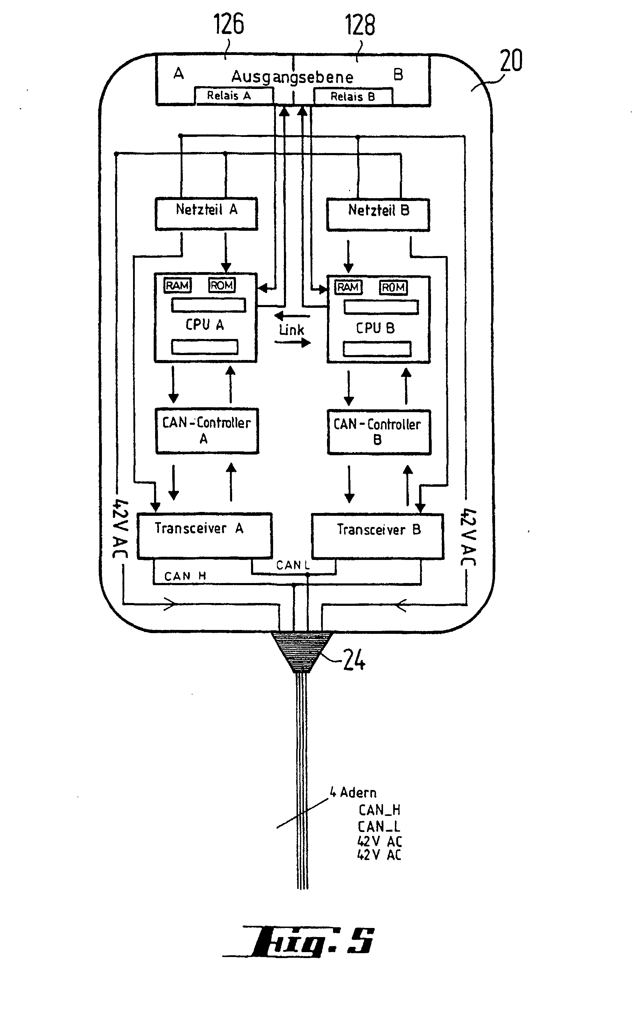

In Fig. 5 ist ein Aufbau der Bus-Abschluss-Station 20 dargestellt. Im Unterschied zu den Bus-Stationen 14, 16, 18 weist die Bus-Abschluss-Station nur den Buseingang 24 und keinen weiteren Busausgang auf. Die Bus-Abschluss-Station 20 kann ebenfalls über Ein- und/oder Ausgänge 126, 128 verfügen. Die technische Funktion der Bus-Abschluss-Station 20 soll später erläutert werden.

In Fig. 6 ist beispielhaft eine Schaltungsanordnung der Ausgangsebene 92, 94 der Kanäle A und B, des Bus-Masters 12 dargestellt. Dabei besteht die Ausgangsebene 94 des Kanals A aus einer Vielzahl von NPN-Transistoren T1 - T4, die emitterseitig über Widerstände R1 - R4 mit Bezugspotential verbunden sind. Kollektorseitig sind die Transistoren T1 - T4 über zwei in Reihe liegende Schließerkontakte 130, 132 mit positiver Betriebsspannung U_{B+} verbunden.

Die Ausgangsebene 92 des Kanals B weist eine Vielzahl von PNP-Transistoren T5 - T8 auf, die emitterseitig miteinander verbunden und über zwei in Reihe liegende Schließerkontakte 134, 136 mit negativer Betriebsspannung U_{B}. verbunden sind. Kollektorseitig sind die Transistoren T5 - T8 über Widerstände R5 - R8 mit Bezugspotential verbunden. Zur Ansteuerung der Transistoren T1 bis T4 weist der Mikrocomputer 90 Ausgänge 138 auf, die vorzugsweise über Optokoppler mit einer Basis der Transistoren T1 - T4 verbunden sind. Auch der Mikrocomputer 62 weist entsprechende Ausgänge 140 auf, mit denen die Transistoren T5 - T8 angesteuert werden können. Zur Überwachung der Schaltfunktionen der Transistoren T1 - T4 einerseits und der Transistoren T5 - T8 andererseits weist der Mikrocomputer 64 Eingänge 142 auf, die mit Ausgängen E1 - E4 der Transistoren T5 - T8 verbunden sind. Gleiches gilt für den Mikrocomputer 62, der Eingänge 144 aufweist, die mit Ausgängen E5 - E8 der Transistoren T1 - T4 verbunden sind. Vorzugsweise sind alle Verbindungen zwischen den Microcomputern 64, 62 über Optokoppler (nicht dargestellt) galvanisch getrennt.

Des Weiteren umfasst die Schaltung zwei Relais 146, 148, wobei das Relais 146 mit einem ersten Anschluss an einem Ausgang 150 des Mikrocomputers 64 und mit einem zweiten Anschluss an einem Eingang 152 des Mikrocomputers 62 anliegt. Entsprechend liegt das Relais 148 mit einem ersten Anschluss an einem Ausgang 154 des Mikrocomputers 62 und einem zweiten Anschluss an einem Eingang 156 des Mikrocomputers 64 an.

Der Ausgang 158 der Ausgangsebene 94 ist mit einer Wicklung 160 eines elektromechanischen Schaltelementes wie Motorschützes verbunden, das seinerseits über einen weiteren Anschluss mit dem Ausgang 162 der Ausgangsebene 92 verbunden ist. Werden aufgrund von Steuerbefehlen der Mikrocomputer 63, 64 die Transistoren T1 und T5 leitend geschaltet und sind die Relais 146, 148 angezogen, so wird das Motorschütz 160 bestromt und zieht an.

Um eine sichere Funktion dieser Schaltungsanordnung zu gewährleisten, sind die Relais 146, 148 als zwangsgeführte Relais ausgeführt, welche im Einschaltaugenblick über ein Zeitfenster elektrisch miteinander verriegelt sind. Die Relaisspulen 146, 148 werden über einen Transistor direkt von jeweils einem Mikrocomputer 62, 64 angesteuert. Die Veischaltung der Relaiskontakte 130, 132, 134, 136 der zwangsgeführten Relais 146, 148 entspricht einem "sicheren Vergleicher".

Selbstverständlich können auch weitere Stationen 14, 16, 18 Ausgänge zum Ansteuern verschiedener Aktoren besitzen. Dabei ist vorgesehen, dass jede Ausgangsstation 122, 124 acht N-schaltende und acht P-schaltende Transistoren aufweist.

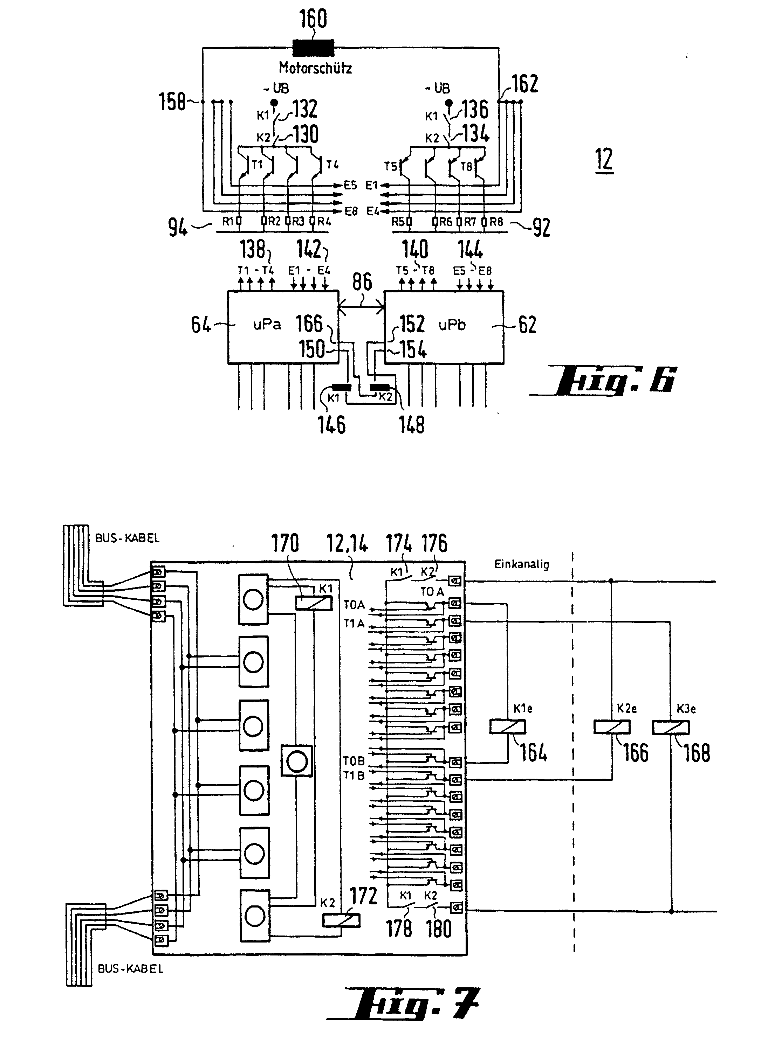

In Fig. 7 ist eine entsprechende Bus-Ausgangsstation 14 dargestellt, die wahlweise an einen externen Verbraucher 164 in einkanaliger Ausführung angeschlossen ist oder wobei zwei Verbraucher 166, 168 eine redundante Anschaltung bilden.

Bei der einkanaligen Anschlussweise liegt der elektrische Verbraucher 164 mit seinem ersten Anschluss an einem Ausgang eines Transistors des Kanals A und mit einem zweiten Anschluss an einem Ausgang eines Transistors des Kanals B. Über den Transistor des Kanals A und die Schließerkontakte 130, 132 liegt der erste Anschluss des Verbrauchers 164 an positiver Betriebsspannung, und über den Transistor des Kanals A, B sowie weitere Schließerkontakte 134, 136 liegt ein zweiter Anschluss des Verbrauchers 164 an negativer Betriebsspannung.

Bei redundanter Ausführungsform des Verbrauchers liegt der erste Verbraucher 166 mit einem ersten Anschluss an positiver Betriebsspannung und mit einem zweiten Anschluss über einen Transistor des Kanals B an negativer Betriebsspannung. Hingegen liegt der zweite Verbraucher 168 mit einem Anschluss an negativer Betriebsspannung und mit einem weiteren Anschluss über einem Tranistor des Kanals A an positiver Betriebsspannung.

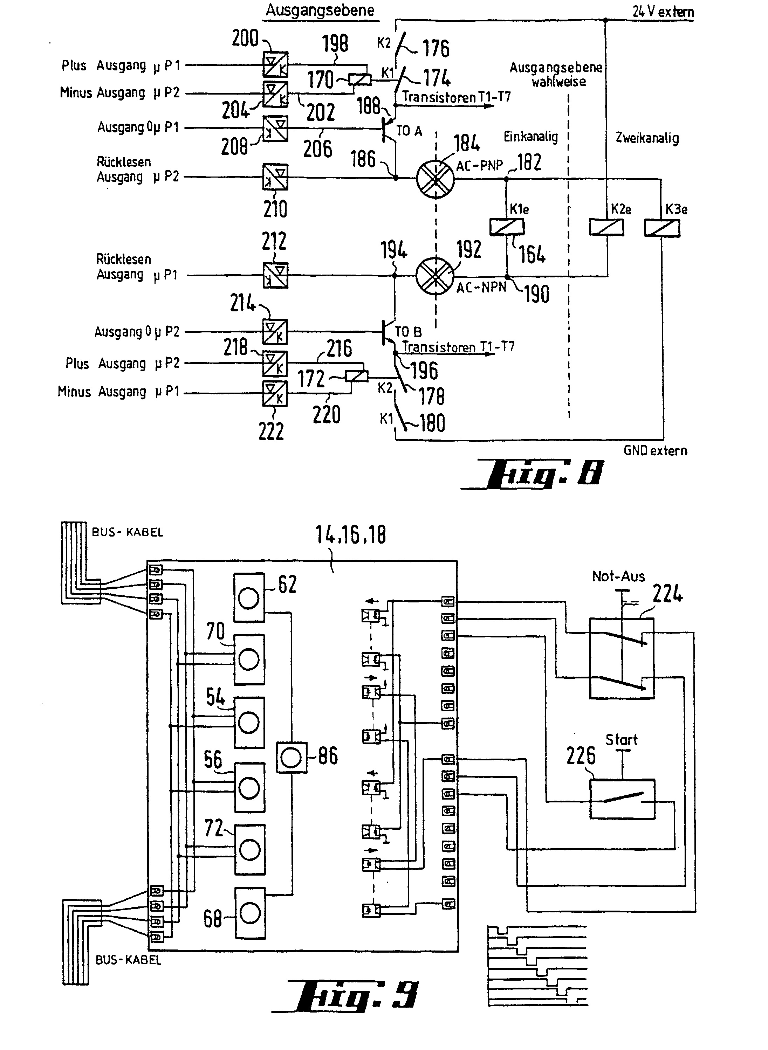

Zur prinzipiellen Beschreibung der Funktion der Schaltkreise gemäß Fig. 6 und 7 ist ein Strompfad in Fig. 8 dargestellt. Bei der einkanaligen Betriebsweise liegt der Verbraucher 164 mit einem ersten Anschluss 182 über eine Klemme 184 an einem Kollektor 186 des Transistors T0A. Dessen Emitter 188 liegt über die Schließerkontakte 174, 176 an positivem Potential der Betriebsspannung.

Ein zweiter Anschluss 190 des Verbrauchers 164 liegt über eine Klemme 192 an einem Kollektor 194 des NPN-Transistors TOB. Ein Emitter 196 des Transistors T0B liegt über die Schließerkontakte 178, 180 an Bezugspotential der Betriebsspannung.

Wie schon mit Bezug zu Fig. 6 erläutert, wird ein erster Anschluss 198 des Relais 170 über einen Optokoppler 200 von einem Ausgang des Mikrocomputers des Kanals A angcsteuert. Ein weiterer Anschluss 202 des Relais 170 liegt über einen Optokoppler 204 an einem Ausgang des Mikrocomputers des Kanals B. Eine Basis 206 des Transistors T0A ist über einen Optokoppler 208 mit einem Ausgang des Mikrocomputers Kanal A verbunden. Zur Überprüfung bzw. Überwachung des Ausgangs 184 bzw. der Funktion des Transistors T0A ist der Kollektor 186 über einen Optokoppler 210 zum Rücklesen mit einem Ausgang des Mikrocomputers Kanal B verbunden.

Gleiches gilt für die Ausgangsebene des Kanals B. Hier wird der Ausgang 192 bzw. der Kollektor 194 über einen Optokoppler 212 mit einem Ausgang des Mikrocomputers Kanal A zum Rücklesen verbunden. Der Transistor T0B wird über einen Optokoppler 214 und einen Ausgang des Mikrocomputers Kanal B angesteuert. Das Relais 172 ist ebenfalls mit einem ersten Anschluss 216 über einen Optokoppler 218 mit einem Plusausgang des Mikrocomputers Kanal B und mit einem zweiten Anschluss 220 und einem Optokoppler 222 mit einem Minusausgang des Mikrocomputers Kanal A verbunden.

Nachdem jeder Kanal A, B nach dem Einschalten einen Selbsttest durchgeführt hat, werden die Relais 170, 172 von den Mikrocomputern Kanal A und Kanal B angesteuert. Die Schließer 176 - 180 schalten die extern angelegte Spannung auf die noch nicht angesteuerten Ausgangstransistoren T0A, T0B durch. Wird eine Freigabe durch beide Mikrocomputer Kanal A, Kanal B erteilt, schalten die Transistoren T0A, T0B ebenfalls durch und der Strompfad für den extern angeschlossenen Verbraucher 164 wird geschlossen.

Im Betrieb werden die Ausgänge 184, 192 getestet, indem der Mikrocomputer Kanal A den zugehörigen Ausgangstransistor TOA kurzzeitig abschaltet. Die Zeit des kurzzeitigen Abschaltens muss kleiner sein als die Reaktionszeit des angeschlossenen Verbrauchers, um eine Reaktion auf die kurzzeitige Stromunterbrechung zu vermeiden. Über den Rücklesepfad 210 erhält der Mikrocomputer Kanal B die Information, ob der Ausgangstransistor T0A tatsächlich seine Funktion erfüllt hat. Sollte er diese Funktion nicht korrekt erfüllt haben, so würde Mikrocomputer Kanal B sein übergeordnetes Sicherheitsrelais 172 zum Abschalten zwingen.

Durch Abschalten des Relais 172 wird das Relais 170 elektrisch verriegelt. Zusätzlich findet ein Datenaustausch über das Schaltverhalten der Ausgangstransistoren T0A, T0B über die zwischen den Mikrocomputern angeordnete Übertragungsleitung 86 bzw. über den "Link" statt. Diese Daten werden somit parallel von zwei Prozessoren verarbeitet. Die Testfunktion wird anschließend von dem Mikrocomputer des Kanals B initialisiert, wobei die Kontrollfunktion in diesem Fall beim Mikrocomputer des Kanals A liegt.

In Fig. 9 ist eine externe Beschaltung einer Bus-Eingangsstation 14, 16, 18 dargestellt. Die Bus-Eingangsstation weist im Wesentlichen einen Hardware-Aufbau auf, die dem der Master-Station 12 entspricht. Mit Ausnahme der seriellen Schnittstelle 88, 90 und den zusätzlichen ROM-Bausteins 116 weist die Bus-Eingangsstation Mikrocomputer 62, 64 auf, die über den Link 86 miteinander verbunden sind, Bus-Controler 70, 72 sowie Netzteile 54, 56 auf.

Eingangsseitig können sowohl zweikanalige Befehlsgeräte 224 wie Not-Aus-Schalter oder einkanalige Befehlsgeräte 226 wie Start-Taster angeschlossen sein.

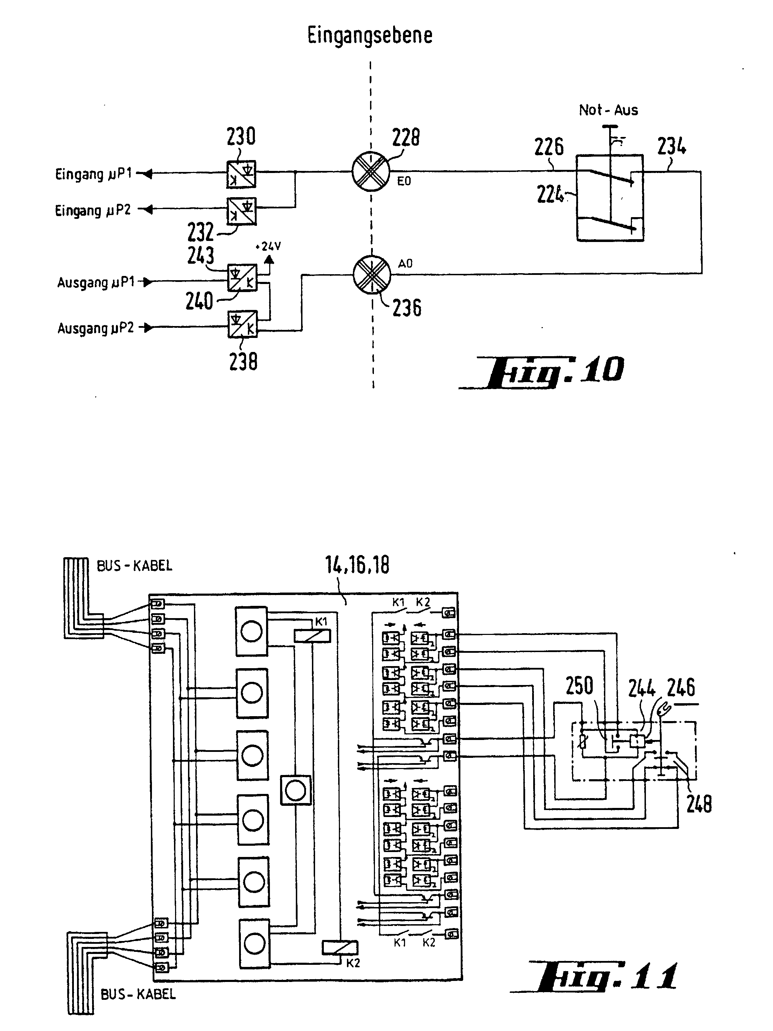

Die Funktion der Schaltungsanordnung soll anhand der Fig. 10 erläutert werden. Dabei ist der Not-Aus-Schalter 224 mit einem ersten Anschluss 226 über eine Eingangsklemme 228 einerseits über einen Optokoppler 230 mit einem Eingang des Mikrocomputers µP1 und andererseits über einen Optokoppler 232 mit einem Eingang des Mikrocomputers µP2 verbunden. Ein weiterer Anschluss 234 des Not-Aus-Schalterkontakts ist über eine Eingangsklemme 236 mit einem Optokoppler 238 verbunden, der seinerseits mit einem Ausgang des Mikrocomputers µP2 verbunden ist. Der Optokoppler 238 weist einen Transistorausgang auf, der über einen weiteren Transistorausgang 240 eines Optokopplers 242 mit Betriebsspannung verbunden ist. Der Transistorausgang 240 ist über einen Ausgang des Mikrocomputers µP1 steuerbar.

Die Funktion des Einlesens soll anhand der Fig. 10 erläutert werden. Die Eingänge 230, 232 sind Leseeingänge des jeweiligen Mikrocomputers µP1, µP2. Die Ausgänge 242, 238 sind Schreibausgänge des jeweiligen Mikrocomputers µP1, µP2. Damit die Optokoppler 230, 232 durchgesteuert werden, müssen die Ausgänge der Mikrocomputer µP1 und µP2 gesetzt sein, um die Optokoppler 242, 238 anzusteuern, damit an dem Ausgang 236 positives Potential anliegt. Unterbricht der Mikrocomputer µP1 mit Hilfe seines Ausgangs den Stromfluss, so müssen die Eingänge der Mikrocomputer µP1 und µP2 ihren Status ändern. Dies gilt ebenfalls, wenn Mikrocomputer µP2 zum Testen den Stromflus unterbricht.

Zusätzlich findet ein Datenaustausch über den Link 86 statt, um festzustellen, ob der jeweilige Eingang seine Funktion erfüllt hat. Wird während der Testung das Befehlsgerät 224 betätigt, wird diese Information durch einen zweiten Kanal des Tasters 224 dem ersten zur Verfügung gestellt und die Testung beschränkt sich auf den homogenen Zustand der Kanäle. Diese Funktion ist nur während der Testung aktiv. Mit dem Prinzip der Eingangstestung soll ein kreuzweiser Prüfvergleich für die Eingangsinformation geschaffen werden.

Des Weiteren sind in Fig. 9 Signalverläufe dargestellt, die eine Querschlusstestung der Eingänge darstellen. Alle Eingänge werden dabei nacheinander kurzzeitig für ≤ 1 ms zurückgesetzt, wobei innerhalb dieser Zeit des Rücksetzens eines Ausgangs der zugehörige Eingang seinen Status beibehalten muss.

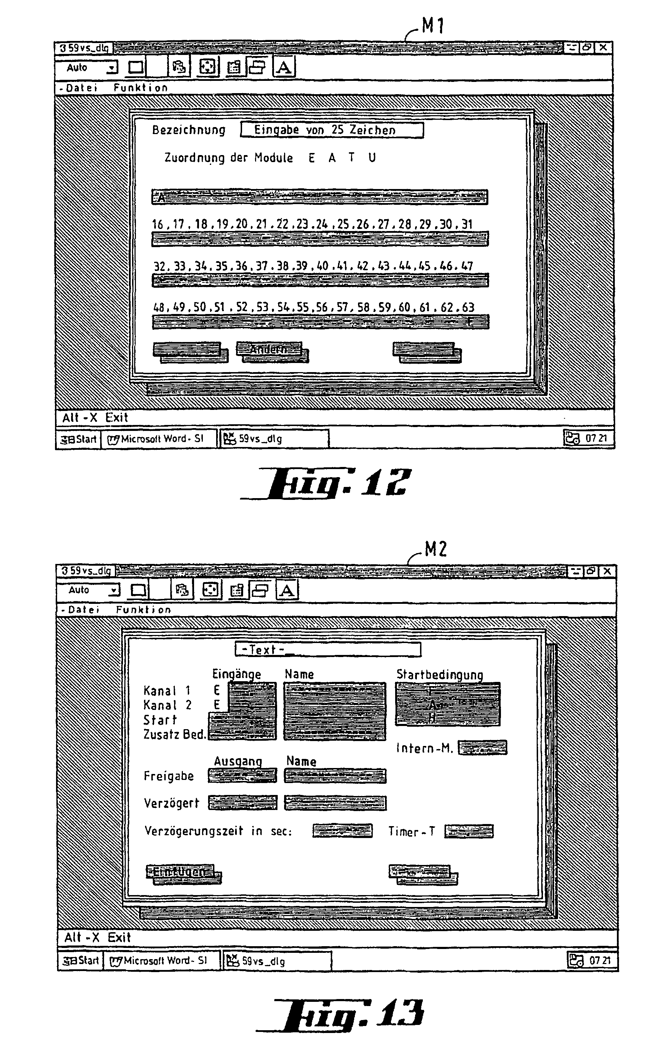

In Fig. 11 ist eine Kombination aus Bus-Ausgangsstation und Bus-Eingangsstation dargestellt. Die Testverfahren entsprechen denen der jeweiligen Einzelstationen, die mit Bezug zu Fig. 6 bis 10 erläutert wurden. In dem hier dargestellten Ausführungsbeispiel ist an der Busstation 14, 16. 18 eine Verriegelungsvorrichtung mit Zuhaltung 244 angeschlossen, das sowohl aktive Elemente wie Spulen 246 als auch passive Schaltelemente wie Tür-/Magnetkontakte 248, 249 aufweist. Die aktiven Elemente 246 werden dabei über Transistorstufen angesteuert, wobei die passiven Elemente 248, 250 über Optokoppler abgefragt und überwacht werden. Zusätzlich kann über einen in dieser Station integrierten Transformator (nicht dargestellt) eine Wechselspannung zum Ansteuern des elektrischen Verbrauchers wie Türmagneten 146 zur Verfügung gestellt werden. Auch hierdurch wird der besondere Vorteil der Versorgung der einzelnen Stationen mit Wechselspannung deutlich. Einerseits können elektrische Verbraucher mit Gleichspannung durch Zwischenschaltung eines einfachen Gleichrichters mit nachgeschalteter Glättung bzw. Regelung eingesetzt werden, andererseits ist aber auch die Spannungsversorgung von Wechselspannungsverbrauchern auf einfache Weise gewährleistet. Insbesondere ist darauf hinzuweisen, dass die Hardware dahingehend konzipiert ist, möglichst Fehler zu vermeiden. Aus diesem Grunde wurden in die Stationen 12 - 20 jeweils zwei unabhängige Kanäle bzw. Funktionseinheiten A und B zur Ausführung von spezifizierten Funktionen integriert. Die Kanäle A und B sind gleich d. h. homogen redundant. Die von beiden Kanälen verwendeten bzw. erzeugten Signale werden zum Zwecke der Fehlererkennung ständig miteiander verglichen (Vergleich von relevanten Ein- und/oder Ausgangssignalen). In diesem Zusammenhang ist insbesondere auf die in Fig. 6 erläuterte übergeordnete Relaisebene (Fail-Safe-Vergleiche), den internen gegenseitigen Vergleich über den Link 86 sowie auf einen externen Vergleich der Eingabedaten durch den Anwender hinzuweisen.

Der RAM-Baustein 116 wird mit Hilfe eines Software-Tests geprüft, wohingegen sich die Testung des ROM-Bausteins 118 auf die Signaturbildung beider Bausteine und deren Vergleich beschränkt.

Durch die Verwendung teildiversitärer Mikrocomputer (Mikrocomputer, die den gleichen Befehlssatz aufweisen, aber intern unterschiedliche Hardware-Strukturen haben), können zum Teil systematische Hardwarefehler aufgedeckt werden. Ungeachtet dessen führen die Mikrocomputer beider Kanäle einer Station ständig Selbsttestfunktionen im Hintergrund aus.

Erfindungsgemäß unterliegt die Kommunikation zwischen der Bus-Anfangsstation bzw. dem Bus-Master 12 und der Bus-Abschluss-Station 20 zeitbedingten Informationen. Ein Ausbleiben einer Nachricht innerhalb eines definierten Zeitfensters, z. B. 15 ms, führt zur Gesamtabschaltung des Systems. Alternativ besteht auch die Möglichkeit, zeitbedingte Informationen nicht nur zwischen dem Master und der Bus-Abschluss-Station 20 sondern zwischen einer Vielzahl von intelligenten Busteilnehmern 14, 16, 18 auszutauschen. Dieser zeitkritische Informationsaustausch beschränkt sich nicht nur auf Bus-Master 12 und Bus-Abschluss-Station 20. Durch diese Maßnahme wird gewährleistet, dass eine Unterbrechung einer Bus-Leitung 38 - 44 innerhalb von ca. 15 ms detektiert werden kann. Der Nachrichteninhalt unterliegt einem zeitlichen Wechsel (Hochzählverfahren). Mit dieser Maßnahme wird verhindert, dass ein anderer Teilnehmer innerhalb des Bussystems die Nachricht des Masters oder Bus-Abschlusses simulieren kann.

Eine Unterbrechung innerhalb einer Station kann sich gemäß den üblichen Fehlerbetrachtungsweisen und entsprechend dem Leiterplatten-Layout nur auf einen Kanal auswirken. Somit wird für diese Fehlerart die Zweitfehlereintrittszeit zu Grunde gelegt. Aus dieser Überlegung ergibt sich die Notwendigkeit, dass sich alle Kanäle in jeder Station (ausgenommen Master 12 und Bus-Abschluss-Station 20) je nach sicherheitstechnischen Anforderungen zum Beispiel innerhalb einer Stunde melden müssten. Auf diese Weise kann die Bus-Auslastung auf ein Maß reduziert werden, das den Anforderungen hinsichtlich der Verfügbarkeit genügt.

Im Folgenden soll die dem Bus-Systems 10 zu Grunde liegende Anwender-Software erläutert werden. Einem Anwender wird die Möglichkeit gegeben, das Steuerungssystem seinen Gegebenheiten anzupassen. Mit Hilfe einer menügesteuerten Software kann der Anwender den Stationen 12 - 20 Ein- und/oder Ausgänge zuordnen. Diese Konfigurationssoftware kann auf jedem IBM-kompatiblen System installiert werden, welches zum Beispiel über das Betriebssystem MS-DOS verfügt. Die Zuordnung von Ein- und Ausgangsebenen erfolgt in einer matrix-ähnlichen Form.

Erfindungsgemäß werden dem Anwender Funktionsblöcke angezeigt, ohne dass dieser selbst Zugriff auf die logischen Funktionen dieser Blöcke hat. Funktionsblöcke betreffen zum Beispiel die Parametrierung handelsüblicher Schutzeinrichtungen, z. B. Türzuhaltungen, Not-Aus-Befehlseinrichtungen und ähnliches, aber auch - für spezielle Schutzfunktionen - die Programmierung logischer Funktionen wie UND, ODER, NICHT. Die logischen Funktionen sind nicht im Programmiergerät wie PC abgelegt, sondern im Programmiergerät werden lediglich der Name des Funktionsblockes z. B. Türzuhaltung, dessen Nummer, Optionen, Eingangsklemmennummern, Ausgangsklemmennummern und Kommentare abgelegt. Die eigentlichen logischen Bestandteile, die in einem Relaisbaustein durch die interne Verdrahtung realisiert sind, liegen als Makro in dem Speicherbaustein 118 wie EPROM ab. Der Speicherbaustein ist z. B. Bestandteil des Bus-Masters 12.

Der Anwender kann aus dem Programmiergerät über die serielle Schnittstelle 90 Daten an z. B. den Bus-Master 12 übertragen. Um dem Anwender die Möglichkeit zu eröffnen, eigene nicht sicherheitsrelevante Aktoren/Sensoren in das System einzubringen, sind zusätzlich Makros mit einfachen logischen Funktionen wie "UND", "ODER" und "NICHT" vorgesehen, die nur auf einen fest vorgegebenen Ausgangsbereich wirken dürfen. Mit diesen Funktionen kann der Anwender einen Eingangsbereich nutzen, diesem logische Funktionen zuordnen und auf vorgegebene Ausgänge wirken lassen. Da die logischen Funktionen dieser Makros nur im Bus-Master 12 abgelegt sind und der Eingangsvariablensatz auf einen Adresbereid, beschränkt wurde und nur vordefinierte Ausgänge benutzt werden dürfen, kann der Anwender keinen Einfluss auf den sicherheitstechnischen Programmteil des Datensatzes nehmen.

In den Fig. 12 - 16 sind beispielhaft Programmiermasken dargestellt, über die das System programmierbar ist. Mit Hilfe einer Maske M1 wird festgelegt, an welcher Stelle sich die jeweiligen Stationen 12 - 20 im Bus-System 10 befinden sollen. Im dargestellten Ausführungsbeispiel liegt eine maximale Ausbaumöglichkeit bei 64 Bus-Stationen. Dabei ist vorgesehen, dass der Bus-Master 12 und die Bus-Abschluss-Station 20 bereits fest vorgegeben sind.

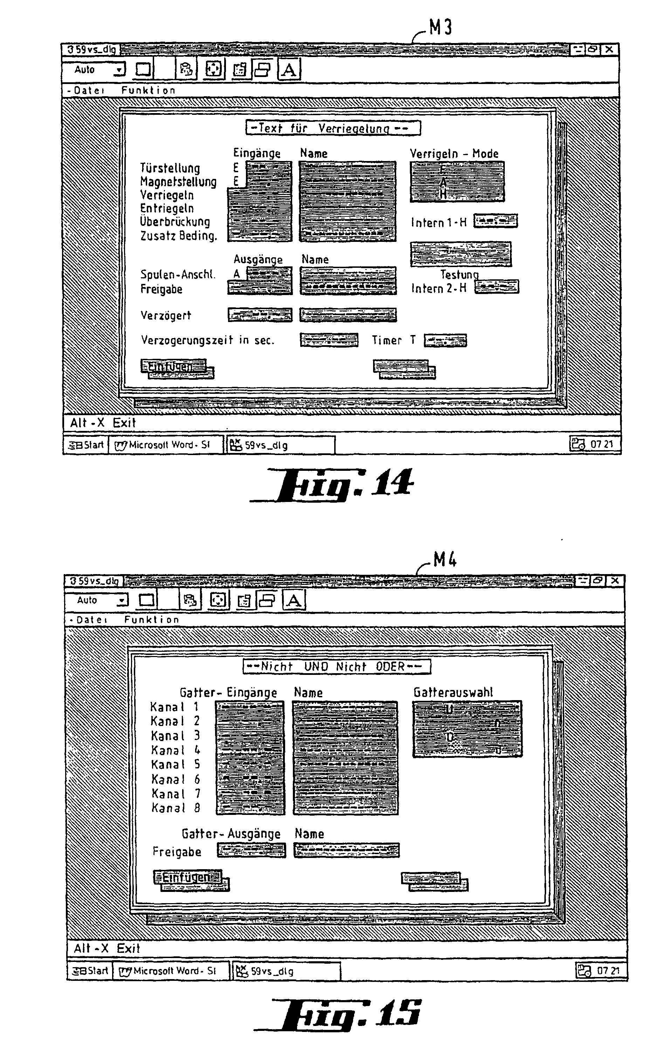

Fig. 13 zeigt eine Maske M2 für ein Not-Aus-Modul. Die Maske M2 weist ein Feld "Bezeichnung" auf, in das ein frei wählbarer Name eingetragen werden kann. Ferner ist ein Feld "Kanal 1" /" Kanal 2" vorgesehen, in das eine Klemmenbezeichnung des aufgelegten Kontaktes eingetragen wird. Des Weiteren ist ein Feld "Start" vorgesehen, das die Klemme eines Start-Tasters beschreibt. Das Feld "Zusatzbed." kann z. B. einen Rückführkreis darstellen. In einem Feld "Freigabe" wird der gewünschte Ausgang bei Erfüllung aller Bedingungen gesetzt. Es wird eine weitere abfallverzögerte Freigabe in einem Feld "verzögert" zur Verfügung gestellt. Die Verzögerungszeit ist dabei einstellbar. Die Startbedingung kann über eine abfallende Flanke automatisch oder mit ansteigender Flanke erfolgen. Im Rahmen anderer Anwendungen könnte je nach sicherheitstechnischen Rahmenbedingungen auch ein automatischer Start vorgesehen sein.

In Fig. 14 ist eine Maske M3 für ein Verriegelungseinrichtungsmodul dargestellt, die im Wesentlichen den Aufbau wie die Maske M2 gemäß Fig. 13 aufweist.

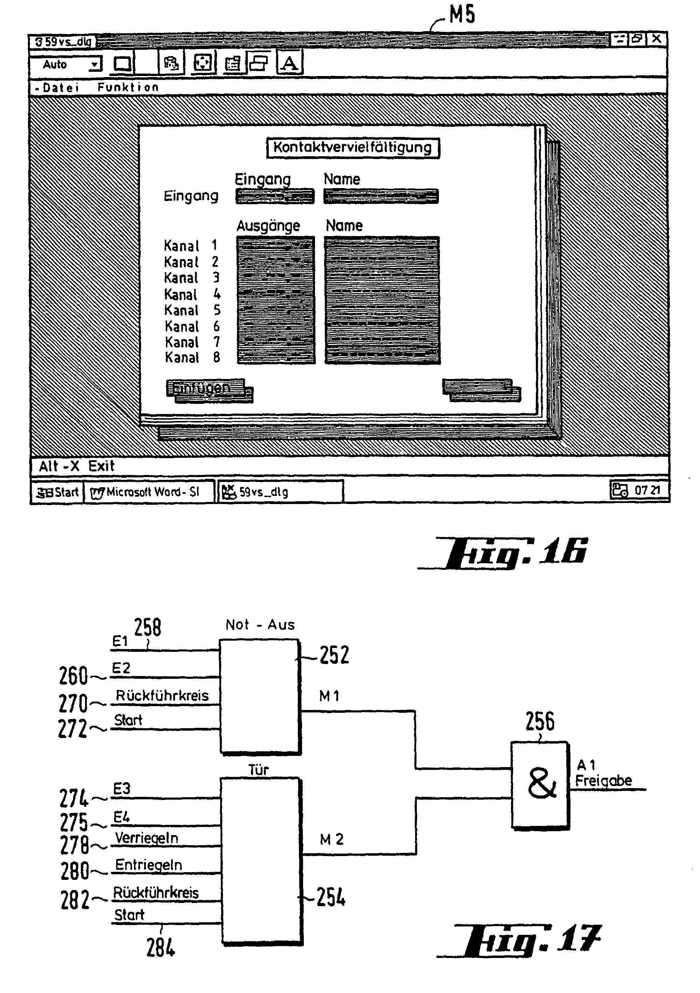

In Fig. 15 ist eine Maske M4 dargestellt, die ein Logik-Modul darstellt. Mit Hilfe dieser Maske M4 können Eingänge oder Merker verknüpft werden. Dazu stehen die logischen Verknüpfungen "UND, ODER, NOR oder NAND" zur Verfügung. Durch Kombination verschiedener logischer Ausdrücke können alle logischen Funktionen programmiert werden.

Fig. 16 zeigt eine Maske M5 eines Kontaktvervielfältigungs-Moduls. In einem Feld "Eingang" kann z. B. ein Ausgang eines Not-Aus-Moduls eingesetzt werden, so dass ein Eingang auf mehrere Ausgänge wirken kann. Des Weiteren sind Felder "Kanal 1 bis 8" vorgesehen, in die nur freie Ausgänge eingesetzt werden können, die sich äquivalent dem "Master-Eingang" verhalten.

Insgesamt wird eine benutzerfreundliche Oberfläche zur Anwenderprogrammierung geschaffen. Die Software wird mit Hilfe automatischer Kontrollprogramme auf die Einhaltung selbst erstellter Richtlinien überprüft. Da erfindungsgemäß Software-Module als Makros im Bus-Master 12 abgelegt sind, sind diese einfach zu prüfen und gegebenenfalls für Erweiterungszwecke leicht zu ändern, weil anstelle eines miteinander und/oder untereinander verknüpften Gesamt-Ablaufprogramms in sich abgeschlossene, vergleichsweise kleine und überschaubar verifizierbare Blöcke (=Makros) das Gesamtprogramm bilden. Durch die Verwendung eines Software-Moduls für jeweils eine Aufgabe wie Türzuhaltung, federkraftverriegelt, magnetkraftverriegelt oder Not-Aus können diese Funktionen auf der untersten Mikrocomputer- bzw. Prozessorebene programmiert werden, was die Transparenz und Fehlerfreiheit dieser Programmteile im Vergleich zu compallierten Progammcodes erhöht.

Nachdem ein Anwender am Programmiergerät wie PC gewünschte Verknüpfungen programmiert hat, wird das Anwenderprogramm über die serielle Schnittstelle 88 an den Kanal A des Bus-Masters 12 übertragen. Dabei werden folgende Daten übertragen:
- Modulart (Not-Aus, Türverriegelung ...),
- Adress-Eingänge,
- Adress-Ausgänge und
- Verzögerungszeiten.

Kanal A des Bus-Masters 12 sendet die Datenteile invertiert über den Link 86 zum Kanal B, dieser invertiert die Daten vollständig zurück und sendet diese direkt über die serielle Schnittstelle 88 des Kanals A an das Programmiergerät zurück. Im Programmiergerät liegt nun das nicht invertierte zurückgelesene Anwenderprogramm und das invertierte gesendete Anwenderprogramm. Diese Daten werden im Programmiergerät verglichen.

Die Kanäle des Bus-Masters vergleichen über den Link 86 die empfangenen Daten des Anwenderprogramms. In dem jeweiligen Kanal werden diese Daten den entsprechenden Makros zugeordnet und in das Flash-Eprom 218 kopiert. Nachdem alle Daten übertragen wurden, muss der Anwender durch Zurückladen der angegebenen Parameter diese mit den ursprünglichen Parametern vergleichen. Durch Bestätigung dieser Handlung kann der Anwender sein Programm als Testlauf/Inbetriebnahme starten. Zusätzlichen bilden Programmiergerät und die jeweiligen Kanäle A und B eine CRC über die empfangenen/gesendeten Daten. Das Programmiergerät sendet als Abschluss seine CRC, die vom Kanal A und B verglichen werden.

Im Folgenden sollen implementierte Überwachungsfunktinen erläutert werden. Es sind implementierte Sicherungsverfahren bzw. Überwachungsfunktionen auf Bus-Ebene, auf Protokoll-Ebene sowie auf Prozessor-Ebene vorgesehen.

Implementierte Sicherungsverfahren auf Bus-Ebene wurden vorgesehen, indem von acht möglichen Daten-Bytes drei genutzt werden und in diesen ein aktueller Zählerstand, ein aktueller invertierter Zählerstand und ein Sicherungsbyte übertragen wird. Jeder Kanal im Master besitzt die Information über die Zählerstände jedes Moduls. Jede Station besitzt einen eigenen Zähler, dessen Spiegel im Master abgelegt ist. Die Zähler einer Station (Kanal A, Kanal B) sind unabhängig.

Folglich liegt die Information des Zählerstandes jeder Station viermal im Bus-Master vor (Kanal A Stationsebenen A, B; Kanal B Stationsebenen A, B). Das Sicherungsbyte enthält die Informationen über den Zustand der Ein-/Ausgänge und ist jeweils in den Kanälen des Masters mit den jeweiligen Zählerständen abgelegt. Die Zählerstände ändern sich mit jedem Senden einer Nachricht/Statusmeldung. Das Sicherungsbyte kann - wenn keine Änderung der Aus-/Eingangszustände eintritt - konstant bleiben. Ändert sich der Zählerstand nicht, so wird ein interner Fehler angenommen und das Bus-System stillgesetzt. Das Senden der Statusmeldungen innerhalb der angegebenen Zeitfenster wird gemäß folgender Tabelle I überwacht:

**TABELLE I:**

| Status gesendet von | Überwacht durch | Zeitfenster/ms |
|---|---|---|
| Mastcr | Busabschluss | 15 ms |
| | alle Stationen | 15 ms |
| Busabschluss | Master | 15 ms |
| | alle Stationen | 15 ms |
| Stationen | Master | 100 ms |

Die Zeitfenster ergeben sich aus folgenden Fehlerfall-Überlegungen:

### 1. Annahme, dass eine der Busleitungen 38, 40, 42, 44 durchtrennt ist

Da die Busleitung nur einkanalig ist, würde ein Durchtrennen dieser Leitung aus der Sicht des Bus-Masters 12 zunächst nicht bemerkt werden. Da die Bus-Abschluss-Station 20 als letzte Station in dieser Kette sich zwangsläufig nicht mehr melden könnte, würden dessen Statusmeldungen im Bus-Master 12 nicht mehr vorliegen. Die Reaktionszeit des Gesamtsystems auf Erstfehler dieser Art muss mindestens der Fehlererkennungszeit traditioneller Sicherheitssysteme entsprechen. Legt man für diese Sicherheitsbetrachtungen Relaisbausteine zu Grunde, erkennt als äquivalenten Fehler die Durchtrennung der Versorgungsspannung an, so würde dieser Baustein im Idealfall in ca. 20 ms abfallen.

### 2. Annahme, dass ein Fehler des Kanals A der Station 16 vorliegt

Der Defekt eines Kanals innerhalb einer Station, der ein Senden von Statusmeldungen unterdrückt. Da alle Stationen redundant aufgebaut sind, würde ein Versagen eines Kanals innerhalb dieser Station nicht zum Verlust der Gesamtfunktion der Station führen. Um ein sicherheitstechnisches Versagen der Station zu erreichen, müsste mindestens ein weiterer Fehler innerhalb derselben Station angenommen werden. Somit beschränkt sich die Aufdeckungszeit des ersten Fehlers auf die Zeit, welche angenommen werden muss, in der der zweite Fehler mit entsprechenden Wahrscheinlichkeitsbetrachtungen noch nicht eintreten wird. Die Zweitfehlereintrittszeit wurde mit < 1 h festgesetzt.

### 3. Annahme, dass die Bus-Abschluss-Station einen Defekt aufweist

Bei Defekt der Bus-Abschluss-Station 20 gelten die gleichen Überlegungen wie mit Bezug zu Fehlerbeschreibung 1 nämlich Durchtrennen der Busleitung.

Knoten B an Master B:

| | |
|---|---|
| Nachrichtentyp | 100 |
| Ebene 1 | 040 |
| Gerätenummer 16 | 010 |

750h für Identifier
00101010000+ Zähler + inv. Zähler + Zustand.

Im Gegensatz zu den Statusmeldungen sind die ereignisorientierten Meldungen mit einer höheren Priorität versehen (Null dominant) und werden so bei der Arbitrierung bevorzugt.

Schließlich sind implementierte Überwachungsfunktionen auf Prozessorebene in Form von RAM-Tests vorgesehen.

Um ein schnelles Abschalten von Ausgängen in einem Bus-System mit sicherheitsgerichteten Funktionen zu erreichen, ist vorrichtungsmäßig vorgesehen, dass die programmierbare Steuereinheit 62, 64 über ein Koppelelement mit dem Bus gekoppelt ist, wobei der programmierbaren Steuereinheit 62, 64 ein Speicherelement zugeordnet ist, in dem Informationen bzw. Nachrichteninhalte zum Aktivieren von Ausgängen und/oder Eingängen abgelegt sind, und wobei in Abhängigkeit eines Vergleichs der in dem Speicherelement abgelegten Informationen mit auf den Bus übertragenen Signalen bzw. Informationen zumindest ein Eingang und/oder Ausgang aktivierbar ist.

Verfahrensmäßig ist vorgesehen, dass eine Bus-Station in Abhängigkeit von einem an dem Eingang und/oder Ausgang anliegenden Signal eine Nachricht auf die Busleitung sendet, wobei die Nachricht von zumindest einer weiteren Bus-Station gelesen und mit für die jeweilige Bus-Station zugeordneten Nachrichteninhalten verglichen wird, wobei bei Übereinstimmung zwischen der Nachricht und dem zugeordneten Nachrichteninhalt eine Aktion wie z. B. Abschalten einer Freigabe durch die Bus-Station ausgeführt wird.

Um dies zu ermöglichen, wird den jeweiligen Ausgängen vor Inbetriebnahme des Systems über den Bus mitgeteilt, auf welche Nachrichteninhalte welche Freigabe geschaltet werden soll. Somit befinden sich in den Speichern der jeweiligen Ausgangsstation Tabellen, welche die Nachrichteninhalte, die zum Abschalten der jeweiligen Freigaben führen sollen, beinhalten. Die Funktion der übergeordneten Steuerung bleibt bestehen. Es wird lediglich ein zusätzlicher Abschaltweg in das System integriert.

Die in den einzelnen Stationen in Speicherelementen abgelegten Abschalt- und/oder Einschalttabellen werden in einem Programmiergerät selbständig generiert. Dabei werden jedem sicherheitsrelevanten Ausgang die Eingänge zugeordnet, auf welche dieser beim Ausschalten reagieren soll. Ist ein Ausgang zum Beispiel von einem Not-Aus-Schalter und einem Kontakt einer Schutztür abhängig, so wird diesem Ausgang eine UND-Funktion zugeordnet, welche direkt von den jeweiligen Eingängen abhängt.

In Fig. 17 ist der logische Aufbau einer Abschalttabelle dargestellt. In dem dargestellten Ausführungsbeispiel ist ein Ausgang A1 von einem Signal M1 eines Not-Aus-Moduls 252 sowie einem Ausgangssignal M2 eines Tür-Moduls 254 abhängig. Die Signale M1, M2 werden einem UND-Glied 256 zugeführt, um ein Freigabesignal für den Ausgang A1 zu generieren.

Das Not-Aus-Modul 252 weist Eingänge 258, 260, 270, 272 für Eingangssignale E1, E2 "Rückführkreis", und "Start" auf. Das Tür-Modul 254 weist Eingänge 274, 276, 278, 280, 282, 284 für Eingangssignale E3, E4, "Verriegeln", "Entriegeln", "Rückführkreis" und "Start" auf. Die beschriebene Abschalttabelle veranlasst ein direktes Abschalten des Ausgangs A1, wenn die Eingangsinformation E1 oder E2 oder E3 oder E4 nicht erfüllt ist.

Sendet eine Eingangsstation, dass ein Eingang geöffnet wurde, wird diese Information von allen Ausgangsstationen gelesen und mit der stationseigenen Abschalttabelle verglichen. Die Abschalttabelle hat nur Einfluss auf das Abschalten einer Freigabe. Das Setzen einer Freigabe kann nur von der Steuereinheit bzw. dem Bus-Master veranlasst werden.

Nachdem ein Anwender die Einzelmodule bestätigt hat, generiert das Programmiergerät wie PC selbständig eine Abschalttabelle und fügt diese dem Übertragungsprotokoll an.

Die Abschalttabelle wird zunächst im Speicher der Steuerung abgelegt. Anschließend werden den jeweiligen Stationen die jeweiligen Abschalttabellen über den Bus übermittelt. Die Stationen senden nach Erhalt der jeweiligen Abschalttabelle ein Echo der erhaltenen Daten, welches von der Steuerung bzw. dem Bus-Master überprüft wird.

Haben beide Kanäle einer Station die Abschalttabelle erhalten, führen diese einen internen Vergleich durch. Die Abschalttabellen in beiden Kanälen müssen gleich sein, da ansonsten keine Systemfreigabe erfolgt.

Wird in dem Programmiergerät eine fehlerhafte Abschalttabelle generiert, so dass einem Ausgang die falsche Eingangsinformation zugeordnet wird, wird dieser Fehler wie folgt aufgedeckt:

Eine Ausgangsstation, welche einen Ausgang aufgrund einer Anforderung zurücksetzen soll, wird mit vier unabhängigen Informationen zu folgenden Handlungen veranlasst:
1. Abschalttabelle Kanal A
2. Abschalttabelle Kanal B
3. Abschaltung durch Master-Kanal A
4. Abschaltung durch Master-Kanal B.

Diese Informationen stehen in einer zeitlichen Abhängigkeit zueinander. Die Abschaltung durch die Abschalttabellen muss immer schneller sein, als die Abschaltung durch die Steuerung bzw. den Bus-Master. Die Abschaltsequenzen müssen eingehalten werden, damit ein Reset nach einer Abschaltung möglich ist. Die Kanäle in der jeweiligen Ausgangsstation überwachen sich gegenseitig auf die Korrektheit der Abschaltsequenzen.

Die anwenderspezifischen Daten werden in dem Flash-Eprom gespeichert. Die Programmierung des Flash-Eproms erfolgt über die serielle Schnittstelle 88. Mit Hilfe eines Schalters und/oder verschiedener Sicherungsmechanismen können die Anwenderdaten übernommen werden.

Die Prüfung des Flash-Eproms erfolgt mit Hilfe des oben beschriebenen CRC-Check. Die Prüfsumme für den CRC-Check wurde vom Anwender-PC erzeugt und mit der von der Master-Station unabhängig erzeugten Prüfsumme verglichen. Nur wenn beide übereinstimmen, wird diese mit dem Flash-Eprom abgespeichert.

Auch ist ein Selbsttest vorgesehen, wobei ein Registertest, ein Flag-Test, ein ALU-Test sowie ein Befehlssatztest vorgesehen ist. Für die Tests ist ein Testprogramm vorgesehen.

Der Watchdog überwacht die Selbsttestfunktionen und wird mit mehr als einem Triggerpunkt angesprochen. Er ist so ausgelegt, dass neben einem zu späten Antriggern auch ein zu frühes Antriggern bemerkt wird.

Wird das Steuerungssystem in Betrieb genommen, beginnt es selbständig mit einer Initialisierungsphase. Die Bus-Master-Station 12 fordert alle angeschlossenen Stationen 14 bis 20 auf, ihren Status zu senden. Sind alle internen Testverfahren wie REM, ROM, I/O, CPU abgeschlossen, werden die Ausgangsebenen freigegeben. Durch die Verwendung von flüchtigen Arbeitsspeichern und der Verwendung von Spannungsüberwachungs IC's befindet sich das Gesamtsystem nach jedem Anlauf in seinem Ausgangszustand.

## Patentansprüche

1. Sicherheitsgerichtetes Steuerungssystem (10) mit einer Vielzahl von Ein- und Ausgänge (138 - 144) aufweisender dezentraler Stationen (14 - 20) und zumindest einer zentralen Station (12), die über eine Busleitung (38 - 44) miteinandner verbunden sind,
**dadurch gekennzeichnet,**
**dass** zumindest eine der dezentralen Stationen (14, 16, 18, 20) eigenständige Einrichtungen (62, 64) zur Fehler tolerierenden und/oder Fehler beherrschenden Selbstüberwachung auf ordnungsgemäße Funktion zur Verknüpfung und Auswertung von an den Ein- und Ausgängen (92, 94) derselben oder weiterer Stationen (12 -1 4) anliegender Signale sowie Einrichtungen zur Verarbeitung dieser Signale und zur Erzeugung eigenständiger Steuerbefehle aufweist,
**dass** die eigenständige Einrichtung (62, 64) über ein Koppelelement mit der Busleitung (38 - 44) gekoppelt ist,dass die eigenständige Einrichtung (62, 64) ein Speicherelement für einen Nachrichteninhalt in Form von logischen Verknüpfungen zwischen Ein- und Ausgängen (138 - 144) der jeweiligen Station aufweist und dass die eigenständige Enrichtung einen Vergleicher aufweist, um einen Vergleich zwischen dem Nachrichteninhalt und einem über die Busleitung übertragenen Datensatz durchzuführen, und dass in Abhängigkeit des Vergleichs eine Aktion an zumindest einem Eingang und/oder Ausgang aktiviert wird.

2. Sicherheitsgerichtetes Steuerungssystem nach Anspruch 1,
**dadurch gekennzeichnet,**
**dass** die Stationen (12-20) einen redundanten Aufbau mit zwei unabhängigen, galvanisch getrennten Teilsystemen bzw. Knoten oder Kanälen (A, B) aufweisen.

3. Sicherheitsgerichtetes Steuerungssystem nach Anspruch 1 oder 2,
**dadurch gekennzeichnet,**
**dass** die redundanten Teilsysteme bzw. Kanäle (A, B) jeweils eigenständige Software-Pakete mit unterschiedlicher Programmstruktur zur Durchführung derselben Berechnung aufweisen.

4. Sicherheitsgerichtetes Steuerungssystem nach einem oder mehreren der vorhergehenden Ansprüche,
**dadurch gekennzeichnet,**
**dass** die eigenständigen Einrichtungen jeweils zumindest eine programmierbare Steuereinheit (62, 64) wie Mikrocomputer aufweisen, der die Funktionen Signalübertragung, Signalempfang und Signalauswertung sowie die Verarbeitung der Signale zu Steuersignalen übernimmt.

5. Sicherheitsgerichtetes Steuerungssystem nach einem oder mehreren der vorhergehenden Ansprüche,
**dadurch gekennzeichnet,**
**dass** jeder Kanal (A, B) einer Station (12 - 20) jeweils eine der programmierbaren Steuereinheiten (62, 64) aufweist.

6. Sicherheitsgerichtetes Steuerungssystem nach einem oder mehreren der vorhergehenden Ansprüche,
**dadurch gekennzeichnet,**
**dass** die Stationen (12 - 20) über eine CAN-Busleitung miteinander verbunden sind, wobei die zumindest eine zentrale Station (12) als Bus-Anfangsstation ausgebildet ist.

7. Sicherheitsgerichtetes Steuerungssystem nach einem oder mehreren der vorhergehenden Ansprüche,
**dadurch gekennzeichnet,**
**dass** das Steuerungssystem (10) als strangförmiges Bussystem ausgeführt ist.

8. Sicherheitsgerichtetes Steuerungssystem nach einem oder mehreren der vorhergehenden Ansprüche,
**dadurch gekennzeichnet,**
**dass** sich die Busleitung (38 - 44) zwischen der Bus-Anfangsstation (12) und einer als Bus-Abschluss-Station (20) ausgebildeten dezentralen Station erstreckt und weitere dezentrale Stationen (14, 16, 18) mit einem Bus-Eingang (26, 28, 30) und einem Bus-Ausang (32, 34, 36) in die Busleitung eingeschleift sind.

9. Sicherheitsgerichtetes Steuerungssystem nach einem oder mehreren der vorhergehenden Ansprüche,
**dadurch gekennzeichnet,**
**dass** zwischen den Stationen (12 - 20) Bussignale bzw. Informationen austauschbar sind, wobei eine Station (12 - 20) aufgrund einer Zustandsänderung an einem Eingang eine Information auf den Bus abgibt, die von zumindest einer weiteren Station (12 - 20) gelesen und ausgewertet wird und wobei die Stationen in Abhängigkeit von empfangenen Informationen eigenständig zugeordnete Steuerungsfunktionen ausführen.

10. Sicherheitsgerichtetes Steuerungssystem nach einem oder mehreren der vorhergehenden Ansprüche,
**dadurch gekennzeichnet,**
**dass** die Bus-Anfangsstation (12) als Bus-Master ausgeführt ist und übergeordnete Bus-Steuerungsfunktionen übernimmt.

11. Sicherheitsgerichtetes Steuerungssystem nach einem oder mehreren der vorhergehenden Ansprüche,
**dadurch gekennzeichnet,**
**dass** zwischen der Bus-Anfangsstation (12) und der Bus-Abschluss-Station (20) zur Überprüfung der Busleitung gegenseitig Signale ausgetauscht werden.

12. Sicherheitsgerichtetes Steuerungssystem nach einem oder mehreren der vorhergehenden Ansprüche,
**dadurch gekennzeichnet,**
**dass** die Busleitung eine Datenleitung (46) und eine Energieversorgungsleitung (48) mit jeweils zwei Adern aufweist.

13. Sicherheitsgerichtetes Steuerungssystem nach einem oder mehreren der vorhergehenden Ansprüche,
**dadurch gekennzeichnet,**
**dass** die Stationen (12 - 20) und/oder an den Stationen angeschlossene Verbraucher über die Busleitung mit Wechselspannung versorgt werden, wobei jedem Kanal (A, B) einer Station (12 - 20) ein separates Netzteil (54, *56)* zugeordnet ist.

14. Sicherheitsgerichtetes Steuerungssystem nach einem oder mehreren der vorhergehenden Ansprüche,
**dadurch gekennzeichnet,**
**dass** zumindest die Bus-Anfangsstation (12) mit einem als Trenntransformator ausgebildeten externen Transformator (52) zur Erzeugung der Versorgungswechselspannung verbunden ist.

15. Sicherheitsgerichtetes Steuerungssystem nach einem oder mehreren der vorhergehenden Ansprüche,
**dadurch gekennzeichnet,**
**dass** die in den Kanälen (A, B) angeordneten programmierbaren Steuereinheiten (62, 64) über eine galvanisch entkoppelte Schnittstelle (86) seriell miteinander gekoppelt sind.

16. Sicherheitsgerichtetes Steuerungssystem nach einem oder mehreren der vorhergehenden Ansprüche,
**dadurch gekennzeichnet,**
**dass** zumindest die Master-Station (12) eine serielle Schnittstelle (88, 90) wie RS 232- oder CAN-Schnittstelle zur Programmierung des Systems aufweist.

17. Sicherheitsgerichtetes Steuerungssystem nach einem oder mehreren der vorhergehenden Ansprüche,
**dadurch gekennzeichnet,**
**dass** zumindest die Bus-Anfangsstation (12) als auch zumindest die Bus-Abschluss-Station (20) jeweils Einheiten zur Erzeugung vorzugsweise periodischer Busmeldungen bzw. Bus-Signale sowie Einrichtungen zum Empfang von Busmeldungen bzw. Bus-Signalen aufweisen und dass beim Ausbleiben von Bus-Meldungen innerhalb einer bestimmten Zeitspanne eine Fehlermeldung erzeugt wird.

18. Sicherheitsgerichtetes Steuerungssystem nach einem oder mehreren der vorhergehenden Ansprüche,
**dadurch gekennzeichnet,**
**dass** die programmierbaren Steuereinheiten (62, 64) jeweils ausgangsseitig mit einem elektromechanischen Schaltgerät (146, 148) wie Relais zur Ansteuerung verbunden sind, wobei die elektromechanischen Schaltgeräte (146, 148) Schaltkontakte (132 - 136) aufweisen, die eine übergeordnete Abschaltfunktion erfüllen.

19. Sicherheitsgerichtetes Steuerungssystem nach einem oder mehreren der vorhergehenden Ansprüche,
**dadurch gekennzeichnet,**
**dass** die Nachrichteninhalte in Form einer Tabelle abgelegt sind.

20. Verfahren zum Betreiben eines sicherheitsgerichteten Steuerungssystems (10) mit einer Vielzahl von Ein- und Ausgänge (138 - 144) aufweisender dezentraler Stationen (14 - 20) und zumindest einer zentralen Station (12), die über eine Busleitung (38 - 44) untereinander Informationen austauschen,
**dadurch gekennzeichnet,**
**dass** in eigenständigen Einrichtungen (62, 64) in zumindest einer der dezentralen Stationen eine fehlertolerierende und/oder fehlerbeherrschende Selbstüberwachung auf ordnungsgemäße Funktion zur Verknüpfung und Auswertung von an den Ein- und Ausgängen derselben oder weiterer Stationen anliegender Signale sowie eine Verarbeitung dieser Signale und eine Erzeugung eigenständiger Steuerbefehle erfolgt, dass in zumindest einer dezentralen (14 - 20) und/oder der zumindest einen zentralen Station (12) ein Nachrichteninhalt in Form von logischen Verknüpfungen zwischen Ein- und Ausgängen (138 - 144) der jeweiligen Station hinterlegt wird, wobei ein Vergleich zwischen dem Nachrichteninhalt und einem über die Busleitung (38 - 44) übertragenen, einen Nachrichteninhalt enthaltenen Datensatz erfolgt und bei Vorliegen eines vorgegebenen Musters zwischen dem Nachrichteninhalt des Datensatzes und dem hinterlegten Nachrichteninhalt eine Aktion on zumindest einem Eingang und/oder Ausgang aktiviert wird.

21. Verfahren nach Anspruch 20,
**dadurch gekennzeichnet,**
**dass** zumindest in der einen zentralen Station (12) Nachrichteninhalte (Abschalttabellen) in Form von logischen Verknüpfungen zwischen Ein- und Ausgängen (138 - 144) des Steuerungssystems (10) hinterlegt sind,
**dass** der einer dezentralen Station (14 - 20) zugeordnete Nachrichteninhalt über die Busleitung in die jeweilige dezentrale Station übertragen wird und
**dass** die dezentrale Station (14 - 20) unabhängig von einem in der zumindest einen zentralen Station ablaufenden Ablaufsteuerprogramm auf einen über die Busleitung übertragenen und mit dem hinterlegten Nachrichteninhalt übereinstimmenden Nachrichteninhalt in Form eines Datensatzes direkt oder indirekt reagiert.

22. Verfahren nach Anspruch 20 oder 21,
**dadurch gekennzeichnet,**
**dass** die Aktion ein Abschalten und/oder Einschalten von sicherheitsrelevanten Ausgängen ist.

23. Verfahren nach Anspruch 21 oder 22,
**dadurch gekennzeichnet,**
**dass** die den Stationen zugeordneten individuellen Informationen bzw. Nachrichteninhalte in Form einer Abschalt- und/oder Einschalttabelle in einem Speicher abgelegt sind.

24. Verfahren nach einem oder mehreren der vorhergehenden Ansprüche,
**dadurch gekennzeichnet,**
**dass** jedem sicherheitsrelevantem Ausgang (138-140) ein oder mehrere Eingänge (142-144) zugordnet werden, deren Zustandsänderung ein Abschalten des jeweiligen Ausgangs bewirkt.

25. Verfahren nach einem oder mehreren der vorhergehenden Ansprüche,
**dadurch gekennzeichnet,**
**dass** die Abschalttabelle ein direktes Abschalten des zugeordneten Ausgangs (138, 140) veranlasst, wenn vorbestimmte Eingangsinformationen erfüllt bzw. nicht erfüllt sind.

26. Verfahren nach einem oder mehreren der vorhergehenden Ansprüche,
**dadurch gekennzeichnet,**
**dass** die Ausgänge (138, 140) aufweisenden Stationen (12 - 20) in Abhängigkeit von auf der Busleitung anliegenden Nachrichten eigenständig das Abschalten von Ausgängen (138, 140) veranlassen.

27. Verfahren nach einem oder mehreren der vorhergehenden Ansprüche,
**dadurch gekennzeichnet,**
**dass** die Abschaltung der Ausgänge (138, 140) durch die Stationen (12 - 20) selbst vor der Abschaltung durch den Bus-Master (12), vorrangig ist.

28. Verfahren nach einem oder mehreren der vorhergehenden Ansprüche,
**dadurch gekennzeichnet,**
**dass** bei zweikanaligen Stationen (12 - 20) ein Vergleich zwischen den Abschalttabellen beider Kanäle (A, B) erfolgt.

29. Verfahren nach einem oder mehreren der vorhergehenden Ansprüche,
**dadurch gekennzeichnet,**
**dass** die Abschalttabelle in einem Speicher, vorzugsweise in der zentralen Station (12), abgelegt ist und dass der jeweiligen dezentralen Station die entsprechend zugeordnete Abschalttabelle übermittelt wird, woraufhin die dezentrale Station ein Rückmeldesignal an die zentrale Station (12) zurücksendet.

## Claims

1. A safety-oriented control system (10) with a plurality of decentralized stations (14 - 20) provided with inputs and outputs (138 - 144) and at least one centralized station (12) connected with each other via a bus line (38 - 44),
wherein
at least one of the decentralized stations (14, 16, 18, 20) has independent devices (62, 64) for fault-tolerating and/or fault-controlling self-monitoring to ensure normal operation for linkage and evaluation of signals located at the inputs and outputs (92, 94) of this station or further stations (12-14), and devices for processing of said signals and for generation of independent control commands, wherein the independent device (62, 64) is coupled via a coupling element to the bus line (38 - 44), wherein the independent device (62, 64) has a memory element for a message content in the form of logic links between inputs and outputs (138 - 144) of the respective station, and wherein the independent device has a comparator for performing a comparison between the message content and a data block transmitted via the bus line and that in dependence on the comparison an action is activated at at least one input and/or output.

2. Safety-oriented control system according to Claim 1,
wherein
the stations (12 - 20) have a redundant design with two independent and galvanically isolated part-systems and nodes or channels (A, B), respectively.

3. Safety-oriented control system according to Claim 1 or Claim 2,
wherein
the redundant part-systems or channels (A, B) each have independent software packages with differing program structure for performance of the same computation.

4. Safety-oriented control system according to one or more of the preceding claims,
wherein
the independent devices have at least one programmable control unit (62, 64) such as a microcomputer that assumes the functions of signal transmission, signal reception and evaluation as well as processing of the signals to control signals.

5. Safety-oriented control system according to one or more of the preceding claims,
wherein
each channel (A, B) of a station (12 - 20) has one of the programmable control units (62, 64).

6. Safety-oriented control system according to one or more of the preceding claims,
wherein
the stations (12 - 20) are linked to one another by a CAN bus line, wherein at least the centralized station (12) is a bus start station.

7. Safety-oriented control system according to one or more of the preceding claims,
wherein
the control system (10) is designed as a lane-like bus line.

8. Safety-oriented control system according to one or more of the preceding claims,
wherein
the bus line (38-44) extends between the bus start station (12) and a decentralized station designed as bus end station (20) and further decentralized stations (14, 16, 18) with a bus input (26, 28, 30) and a bus output (32, 34, 36) are incorporated into the bus line.

9. Safety-oriented control system according to one or more of the preceding claims,
wherein
bus signals or information are exchangeable between the stations (12 - 20), where one station (12 - 20) provides the bus with information on the basis of a state change to the input, which is read and evaluated by at least one further station (12 - 20) and where the stations perform independently allocated control functions depending on the information received.

10. Safety-oriented control system according to one or more of the preceding claims,
wherein
the bus start station (12) is designed as the bus master and assumes higher-order bus control functions.

11. Safety-oriented control system according to one or more of the preceding claims,
wherein
signals are mutually exchanged between the bus start station (12) and the bus end station (20) for checking of the bus line.

12. Safety-oriented control system according to one or more of the preceding claims,
wherein
the bus line has a data line (46) and a power supply line (48) each with two conductors.

13. Safety-oriented control system according to one or more of the preceding claims,
wherein
the stations (12 - 20) and/or consumers connected thereto are supplied via the bus line with AC voltage, whereby each channel (A, B) of a station (12 - 20) is assigned a separate power pack (54, 56).

14. Safety-oriented control system according to one or more of the preceding claims,
wherein
at least the bus start station (12), is connected to an external transformer designated as isolating transformer (52) for generation of the supply AC voltage.

15. Safety-oriented control system according to one or more of the preceding claims,
wherein
the programmable control units (62, 64) arranged in the channels (A, B) are serially linked to one another via a galvanically decoupled interface (86).

16. Safety-oriented control system according to one or more of the preceding claims,
wherein
at least the master station (12) has a serial interface (88, 90) such as an RS 232 or CAN interface for programming of the system.

17. Safety-oriented control system according to one or more of the preceding claims,
wherein
at least the bus start station (12) and at least the bus end station (20) each have units for generating preferably periodic bus messages or bus signals and devices for receiving bus messages or bus signals, and wherein a fault message is generated within a certain period if there are no bus messages.

18. Safety-oriented control system according to one or more of the preceding claims,
wherein
the programmable control units (62, 64) are each connected on the output side with an electromechanical switching unit (146, 148) such as a relay for control, said electromechanical switching units (146, 148) having switching contacts (132 - 136) that perform a higher-order shutdown function.

19. Safety-oriented control system according to one or more of the preceding claims,
wherein
the message contents are filed in the form of a table.

20. A method for operation of a safety-oriented control system (10) with a plurality of decentralized stations (14 - 20) provided with inputs and outputs (138 - 144) and at least one centralized station (12) exchanging information with each other via a bus line (38 - 44),
wherein
in independent devices (62, 64) in at least one of the decentralized stations fault-tolerating and/or fault-controlling self-monitoring to ensure normal operation for linkage and evaluation of signals located at the inputs and outputs of this station or further stations takes place as well as a processing of said signals and a generation of independent control commands, wherein in at least one decentralized (14 - 20) and/or the at least one centralized station (12) a message content in the form of logic links between inputs and outputs (138 - 144) of the respective station is filed in at least one decentralized (14 - 20) and/or at least one centralized station (12), whereby a comparison is made between the message content and a data block having a message content transmitted via the bus line (38 - 44) and an action is activated at at least one input and/or output when a predetermined pattern is obtained between the message content of the data block and the filed message content.

21. Method according to Claim 20
wherein
at least in the one centralized station (12) message contents (turn-off tables) in the form of logic links between inputs and outputs (138 - 144) of the control system (10) are filed, wherein the message content assigned to a decentralized station (14 - 20) is transmitted in the respective decentralized station via the bus line, and wherein independently of a runoff control program running off in the at least one centralized station the decentralized station (14 - 20) reacts directly or indirectly to a message content in the form of a data block corresponding to the message content filed and transmitted via the bus line.

22. Method according to Claim 20 or 21,
wherein
the action is a shutdown and/or switch-on of safety-relevant outputs.

23. Method according to Claim 21 or Claim 22,
wherein
the individual information or message contents assigned to the stations are filed in a memory in the form of a shutdown and/or turn-on-table.

24. Method according to one or more of the preceding claims,
wherein
one or more inputs (142-144) are assigned to each safety-relevant output (138-140), the state change of which effects a shutdown of the respective output.

25. Method according to one or more of the preceding claims,
wherein
the shutdown table initiates a direct shutdown of the assigned output (138, 140) when predetermined input information is met / not met.

26. Method according to one or more of the preceding claims,
wherein
the stations (12-20) having outputs (138, 140) independently initiate the shutdown of outputs (138, 140) depending on the information located at the bus line.

27. Method according to one or more of the preceding claims,
wherein
the shutdown of the outputs (138, 140) by the bus stations (12 - 20) takes priority even before the shutdown by the bus master (12).

28. Method according to one or more of the preceding claims,
wherein
in the case of two-channel stations (12-20) a comparison is made between the shutdown tables of both channels (A, B).

29. Method according to one or more of the preceding claims,
wherein
the shutdown table is filed in a memory, preferably in the centralized station (12), and wherein the respective shutdown table is transmitted to the respective decentralized station, whereupon the decentralized station transmits a feedback signal to the centralized station (12).

## Revendications

1. Système de commande de sécurité (10) comportant un grand nombre de postes décentralisés (14 - 20) équipés d'entrées et de sorties (138 - 144) et au moins un poste central (12) relié par un bus (38 - 44),
**caractérisé en ce que**
au moins l'un des postes décentralisés (14, 16, 18, 20) comporte des installations indépendantes (62, 64) pour surveiller automatiquement le fonctionnement correct tolérant des défauts et/ou des erreurs pour combiner et exploiter des signaux appliqués aux entrées et sorties (92, 94) de ce poste ou d'autres postes (12 - 14) ainsi que des installations pour traiter ces signaux et générer des ordres de commande indépendants,
l'installation indépendante (62 - 64) est couplée au bus (38 - 44) par un élément de couplage,
l'installation indépendante (62 - 64) comporte un élément de mémoire pour recevoir une information sous la forme de combinaisons logiques entre les entrées et les sorties (138 - 144) de chaque poste, et
l'installation indépendante comporte un comparateur pour comparer entre le contenu de l'information et un jeu de données transmis par la ligne de bus, et
en fonction de la comparaison, on met en oeuvre une action sur au moins une entrée et/ou sortie.

2. Système de commande de sécurité selon la revendication 1,
**caractérisé en ce que**
les stations (12 - 20) ont une structure redondante à deux parties de système, ou noeuds ou canaux (A, B) séparés galvaniquement.

3. Système de commande de sécurité selon la revendication 1 ou 2,
**caractérisé en ce que**
les systèmes partiels ou canaux (A, B) redondants ont chaque fois un paquet de programmes indépendants à structures de programmes différentes pour exécuter le même calcul.

4. Système de commande de sécurité selon une ou plusieurs des revendications précédentes,
**caractérisé en ce que**
les installations indépendantes ont chaque fois au moins une unité de commande programmable (62 - 64) ainsi que des micro-ordinateurs assurant les fonctions de transmission de signal, de réception de signal et d'exploitation de signal ainsi que de traitement des signaux pour donner des signaux de commande.

5. Système de commande de sécurité selon l'une ou plusieurs des revendications précédentes,
**caractérisé en ce que**
chaque canal (A, B) d'un poste (12 - 20) comporte chaque fois une unité de commande programmable (62 - 64).

6. Système de commande de sécurité selon l'une ou plusieurs des revendications précédentes,
**caractérisé en ce que**
les postes (12 - 20) sont reliés entre eux par un bus (CAN) et au moins un poste central (12) constitue le poste de réception du bus.

7. Système de commande de sécurité selon l'une ou plusieurs des revendications précédentes,
**caractérisé en ce que**
le système de commande (10) est un système de bus en ligne.

8. Système de commande de sécurité selon l'une ou plusieurs des revendications précédentes,
**caractérisé en ce que**
le bus (38 - 44) s'étend entre le poste de début de bus (12) et un poste décentralisé réalisé comme poste de fin de bus (20) et d'autres postes décentralisés (14, 16, 18) sont bouclés avec un bus d'entrées (26, 28, 30) et un bus de sorties (32, 34, 36) dans le bus.

9. Système de commande de sécurité selon l'une ou plusieurs des revendications précédentes,
**caractérisé en ce que**
des signaux de bus ou des informations sont échangés entre les postes (12 - 20), un poste (12- 20) émettant une information sur le bus du fait d'une variation d'état à une entrée, cette information étant lue et exploitée par au moins un autre poste (12 - 20) et les postes exécutent des fonctions de commande associées, propres en fonction des informations reçues.

10. Système de commande de sécurité selon l'une ou plusieurs des revendications précédentes,
**caractérisé en ce que**
le poste de début de bus (12) est réalisé sous la forme d'un bus-maître et il assure les fonctions de commande de supervision du bus.

11. Système de commande de sécurité selon l'une ou plusieurs des revendications précédentes,
**caractérisé en ce qu'**
entre le poste de début de bus (12) et le poste de fin de bus (20) s'échangent réciproquement des signaux pour contrôler le bus.

12. Système de commande de sécurité selon l'une ou plusieurs des revendications précédentes,
**caractérisé en ce que**
le bus comporte une ligne de données (46) et une ligne d'alimentation (48) avec chaque fois deux brins.

13. Système de commande de sécurité selon l'une ou plusieurs des revendications précédentes,
**caractérisé en ce que**
les postes (12 - 20) et/ou les consommateurs raccordés aux postes sont alimentés par l'intermédiaire du bus en tension alternative, et à chaque canal (A, B) d'un poste (12 - 20) est associée une partie de réseaux distincts (54, 56).

14. Système de commande de sécurité selon l'une ou plusieurs des revendications précédentes,
**caractérisé en ce qu'**
au moins le poste de début de bus (12) est relié par un transformateur externe (52) en forme de transformateur de coupure pour générer la tension alternative d'alimentation.

15. Système de commande de sécurité selon l'une ou plusieurs des revendications précédentes,
**caractérisé en ce que**
les unités de commande (62, 64) programmables associées aux canaux (A, B) sont couplées en série par des interfaces (86) découplées galvaniquement.

16. Système de commande de sécurité selon l'une ou plusieurs des revendications précédentes,
**caractérisé en ce qu'**
au moins le poste maître (12) comporte une interface série (88, 90) ainsi qu'une interface RS 232 ou une interface CAN pour programmer le système.

17. Système de commande de sécurité selon l'une ou plusieurs des revendications précédentes,
**caractérisé en ce qu'**
au moins le poste de début de bus (12) ainsi qu'au moins le poste de fin de bus (20) comporte chaque fois des unités pour générer de préférence des signaux de bus périodiques ou des informations de bus, ainsi que des installations pour recevoir des informations de bus, ou des signaux de bus et en cas de coupure de signaux de bus à l'intérieur d'une période déterminée, on génère un signal de défaut.

18. Système de commande de sécurité selon l'une ou plusieurs des revendications précédentes,
**caractérisé en ce que**
les unités de commande programmables (62 - 64) sont reliées chacune en sorties à un appareil de commutation électromécanique (146, 148) tel qu'un relais pour la commande, les appareils de commutation électromécaniques (146, 148) comportant des contacts de commutation (132 - 136) assurant une fonction de coupure de supervision.

19. Système de commande de sécurité selon l'une ou plusieurs des revendications précédentes,
**caractérisé en ce que**
les contenus d'informations sont enregistrés sous la forme d'un tableau.

20. Procédé de mise en oeuvre d'un système de commande de sécurité (10) comportant plusieurs postes décentralisés (14 - 20) ayant des entrées et sorties (138 - 144) et au moins un poste central (12), reliés par un bus (38 - 44) pour échanger des informations,
**caractérisé en ce que**
dans des installations indépendantes (62, 64) dans au moins l'un des postes décentralisés, on effectue une surveillance indépendante tolérant les défauts et/ou traitant les défauts pour vérifier le fonctionnement correct pour la combinaison et l'exploitation de signaux appliqués aux entrées et sorties de ces postes ainsi que d'autres postes et un traitement de ces signaux et une génération d'ordre indépendant, et
dans au moins un poste décentralisé (14 -20) et/ou au moins un poste central (12) on enregistre un contenu d'informations sous la forme de combinaisons logiques entre les entrées et sorties (138 - 144) du poste respectif,
on effectue une comparaison se faisant entre le contenu d'informations et un jeu de données transmis par la ligne de bus (38 - 44) et contenant un contenu d'information, et en présence d'un modèle prédéterminé entre le contenu d'informations du jeu de données et le contenu d'informations enregistrées, on active une action sur au moins une entrée et/ou une sortie.

21. Procédé selon la revendication 20,
**caractérisé en ce qu'**
au moins dans un poste central (12) on enregistre des contenus d'information (tableaux de coupure) sous la forme de combinaisons logiques entre les entrées et sorties (138 - 14) du système de commande (10),
le contenu d'informations associé à un poste décentralisé (14 - 20) est transmis par le bus au poste décentralisé respectif, et
le poste décentralisé (14 - 20), indépendamment d'un programme de commande de déroulement qui s'effectue au moins dans un poste central, réagit directement ou indirectement à un contenu d'informations sous la forme d'un jeu de données, transmis par le bus et qui correspond au contenu d'informations enregistré.

22. Procédé selon la revendication 20 ou 21,
**caractérisé en ce que**
l'action consiste à couper et/ou à brancher des sorties concernant la sécurité.

23. Procédé selon la revendication 21 ou 22,
**caractérisé en ce que**
les informations ou contenus d'informations individuels associés aux stations sont enregistrés dans une mémoire sous la forme d'un tableau de coupure et/ou branchement.

24. Procédé selon une ou plusieurs des revendications précédentes,
**caractérisé en ce qu'**
une ou plusieurs entrées (142 - 144) sont associées à chaque sortie concernant la sécurité (138 - 140), entrée dont la variation d'état produit une coupure de la sortie respective.

25. Procédé selon une ou plusieurs des revendications précédentes,
**caractérisé en ce que**
le tableau de coupure produit une coupure directe de la sorties associée (138 - 140) lorsque des informations d'entrées prédéterminées sont satisfaites ou non satisfaites.

26. Procédé selon une ou plusieurs des revendications précédentes,
**caractérisé en ce que**
les postes (12 -20) comportant les sorties (138 - 140) autorisent distinctement la coupure de sorties (138 - 140) en fonction d'informations présentes sur le bus.

27. Procédé selon une ou plusieurs des revendications précédentes,
**caractérisé en ce que**
la coupure des sorties (138 - 140) par les postes (12 - 20) est prioritaire même par rapport à la coupure par le poste (12) du bus-maître.

28. Procédé selon une ou plusieurs des revendications précédentes,
**caractérisé en ce que**
dans le cas de poste à deux canaux (12 -20), on compare entre les tableaux de coupure des deux canaux (A, B).

29. Procédé selon une ou plusieurs des revendications précédentes,
**caractérisé en ce que**
le tableau de coupure est enregistré dans une mémoire, de préférence dans le poste central (12), et le poste décentralisé respectif transmet le tableau de coupure associé correspondant puis le poste décentralisé envoie en retour un signal d'informations de retour vers le poste central (12).
